(19) Europäisches Patentamt / European Patent Office / Office européen des brevets

(11) EP 3 339 930 A1

(12) # EUROPÄISCHE PATENTANMELDUNG

(43) Veröffentlichungstag:
**27.06.2018 Patentblatt 2018/26**

(51) Int Cl.:
***G02B 7/04*** *(2006.01)* ***G02B 7/08*** *(2006.01)*
***G02B 13/00*** *(2006.01)*

(21) Anmeldenummer: **17208799.1**

(22) Anmeldetag: **20.12.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **22.12.2016 DE 102016125402**

(71) Anmelder: **Carl Zeiss AG**
**73447 Oberkochen (DE)**

(72) Erfinder: **PRETORIUS, Marco**
**73447 Oberkochen (DE)**

(74) Vertreter: **PATERIS Patentanwälte PartmbB**
**Markgrafenstrasse 22**
**10117 Berlin (DE)**

(54) **KOMPAKTES KAMERAOBJEKTIV HÖCHSTER ABBILDUNGSGÜTE FÜR EINE KAMERA MIT VOLLFORMATSENSOR**

(57) Es wird ein Kameraobjektiv (1) für eine Vollformatkamera mit einer ersten, objektseitig führenden Linsengruppe (10), einer zweiten Linsengruppe (20), die auf die erste Linsengruppe (10) folgt, einer dritten, sensorseitig abschließenden Linsengruppe (30), die auf die zweite Linsengruppe (20) folgt, und einer Aperturblende (40), die zwischen der ersten Linsengruppe (10) und der zweiten Linsengruppe (20) angeordnet ist, angegeben. Dabei besitzt die erste Linsengruppe (10) eine sammelnde Brechkraft. Die zweite Linsengruppe (20) umfasst wenigstens zwei entlang der optischen Achse (50) beweglich angeordnete Linsen und die dritte Linsengruppe (30) weist wenigstens eine in Längsrichtung der optischen Achse (50) fix angeordnete asphärische Linse (31) auf, wobei die asphärische Linse einen Durchmesser von mindestens 25 mm besitzt.

Fig. 13

100
40
104
1
21
22
31
102
50
10
20
30

EP 3 339 930 A1

**Beschreibung**

Die vorliegende Erfindung betrifft ein Kameraobjektiv, welches kompakt ist, eine höchste Abbildungsgüte aufweist und für die Benutzung mit einer Kamera mit einem Vollformatsensor ausgebildet ist. Daneben betrifft die Erfindung eine Foto- oder Filmkamera.

Die immer fortschreitende Verbesserung der Foto- und Filmkameras mit einer Pixeldichte von mittlerweile 50 Millionen Pixel auf einer Fläche von 24 mm x 36 mm und der daraus ergebenden Pixelgröße von ca. 4 $\mu$m pro Kantenlänge führt zu immer höheren Anforderungen an das vorgeschaltete Kameraobjektiv. Die zur Bestimmung der Bildqualität benutzte optische Übertragungsfunktion für ein System, bestehend aus einem Kameraobjektiv und einer Kamera, hängt nunmehr in erster Linie nicht mehr von der Modulationstransferfunktion des Sensors ab, sondern ist stärker abhängig von der Modulationstransferfunktion des Kameraobjektivs. Dabei zeigt die Modulationstransferfunktion den jeweiligen Kontrast für Linienpaare mit unterschiedlichem Zwischenabstand und unterschiedlicher Linienbreite. Häufig werden Kameraobjektive nach dem Kontrastwert der Modulationstransferfunktion bei 80 Linienpaaren pro Millimeter bewertet. Ein Kameraobjektiv, das zum einen eine Modulationstransferfunktion aufzeigt, bei der bei 80 Linienpaaren pro Millimeter ein wellenlängenunabhängiger Kontrast von mindestens 50% erreicht wird und zum anderen eine Modulationstransferfunktion aufzeigt, bei der bei 80 Linienpaaren pro Millimeter ein Kontrast von mindestens 70 % erreicht wird, wenn das Strahlenbündel auf 80 % beschnitten wurde, wird als Linse mit einer Bildgüte auf außergewöhnlich hohem Niveau bezeichnet. Diese Bildgüte wird typischerweise von normalen Kameraobjektiven nicht erreicht, auch wenn diese meist groß und schwer sind.

Neben der Bildgüte spielt auch die Objektivgröße eine wesentliche Rolle bei dem Ausarbeiten des optischen Designs. Besonders leichte und kompakte Kameraobjektive haben meist eine Baulänge von kleiner oder gleich dem 1,5-fachen des Bildkreisdurchmessers.

Moderne Kameraobjektive verfügen mittlerweile über eine schnelle Innenfokussierung mit Fokussierzeiten typischerweise kleiner oder gleich 100 ms. Des Weiteren verfügen solche Kameraobjektive über einen großen Objektentfernungsbereich. Typischerweise ist dabei die minimale Objektentfernung zum Sensor kleiner oder gleich der zehnfachen Objektivbrennweite. Hierbei wird auch meist gefordert, dass im Naheinstellbereich eine hohe Bildgüte erhalten bleibt. Damit in modernen Kameraobjektiven der Einsatz von auf sehr kurze Fokussierzeiten ausgerichtete Aktorikmodulen möglich ist, sollte die Masse der zu bewegenden Linsen bevorzugt maximal 20 g bis 30 g betragen. Bei einer größeren Masse der zu bewegenden Linsen können die auftretenden Beschleunigungskräfte typische Aktorikmodule außer Kraft setzen.

Der Aufbau moderner Sensoren für Foto- oder Filmkameras bedingt, dass der Einfallswinkel der Hauptstrahlen am Sensor nicht größer als 30° ist, damit keine unerwünschte Abschattung der Pixel am Feldrand auftritt. Vorzugsweise ist der Einfallswinkel der Hauptstrahlen am Sensor nicht größer als 26°.

Kameraobjektive, die zusammen mit Vorsatzoptiken verwendet werden, sollen die nicht triviale Forderung, dass die Bildgüte über den gesamten Objektentfernungsbereich hinweg ohne wesentliche Verschlechterung erhalten bleibt, erfüllen.

Einige der vorgenannten Bedingungen werden bereits von Objektivdesigns für Smartphone-Kameras erfüllt. Beispielsweise ist in der US 2015/0198790 A1 ein extrem kompakter Aufbau für eine Handykamera-Optik beschrieben, die das oben genannte Kriterium bezüglich Baulänge und das Kriterium bezüglich Einfallswinkel am Bildsensor erfüllt. Auch das Kriterium für die Lage der Eintrittspupille ist erfüllt, da bei den bekannten Handykamera-Objektiven häufig die Aperturblende durch die Berandung der ersten Linse selbst gegeben ist. In diesem Fall ist die Eintrittspupille gleich der Aperturblende und damit konstant.

In der US 2015/0198790 A1 sowie in der US 8,369,029 B2 und in der DE 10 2004 060 786 A1 sind jeweils unterschiedliche Objektivdesigns für Handykameras offenbart. Die offenbarten Anordnungen der Linsen der jeweiligen Kameraobjektive beinhalten asphärische Linsen, die im Bereich der optischen Nutzfläche Wendepunkte aufweisen. Eine einen Wendepunkt aufweisende, asphärische Linse ändert das Vorzeichen der Brechkraft für unterschiedliche Bereiche des Strahlbündels, welches durch die asphärische Linse hindurchtritt. Eine einen Wendepunkt aufweisende, asphärische Linse kann zum Beispiel für ein Strahlbündel entlang der optischen Achse zerstreuend wirken und für ein Strahlbündel entlang des Randes sammelnd wirken. Die Verwendung derartiger asphärischer Linsen mit Wendepunkten ist typisch für die meisten Handykamera-Objektive.

Optische Designs für Kameraobjektive mit Wendepunkten aufweisenden asphärischen Linsen sind in der US 9,310,590 B1, in der US 2016/0011399 A1, in der US 2015/0212389 A1, in der US 8,964,307 B2, in der US 8,373,932 B2, in der US 9,116,328 B2, in der US 9,025,258 B2, in der US 9,036,276 B2, in der US 9,217,843 B2, in der US 9,235,030 B2 und in der US 2015/0177492 A1 offenbart.

Die US 4,416,518 offenbart ein Kameraobjektiv für eine Farbfilmkamera. Das Kameraobjektiv umfasst mehrere bewegliche Linsenkomponenten und mindestens eine stationäre Linsenkomponentengruppe. Dabei weisen mindestens zwei der Komponenten eine asphärische Oberfläche auf. Die bewegbaren Komponenten bestehen aus einzelnen Linsen, von denen mindestens eine Linse eine asphärische Fläche aufweist, während die ortsfeste Linsenkomponentengruppe mindestens eine asphärische Oberfläche aufweisen kann.

Ein Zoomobjektiv mit zwei beweglichen Linsengruppen ist in der US 5,986,821 offenbart. Ein Kameraobjektiv mit drei Linsengruppen und einer beweglich angeordneten inneren Bikonvexlinse ist in der US 4,456,345 offenbart.

Bei allen bekannten Aufbauten für Handykamera-Objektive erreicht jedoch die Bildgüte, wenn man das optische Design so skaliert, dass der Bildkreisdurchmesser dem Vollformat entspricht, nicht annähernd die geforderten > 50% Kontrast bei 80 Linienpaaren pro Millimeter in der Modulationstransferfunktion. Insbesondere ist bei Handykamera-Objektiven durch die Vermeidung von jeglichen sogenannten Kittglieder die Korrektion chromatischer Aberrationen vollkommen unzureichend. Weiterhin ist bei den Handykamera-Objektiven nur eine Fokussierung durch eine Gesamtobjektivverschiebung vorgesehen. Dabei bricht die Bildgüte schon beim 20- bis 30-fachen der Objektivbrennweite stark ein. Die hohen Bildgüteanforderungen in der Naheinstellung werden dadurch zusätzlich noch stärker verfehlt.

Die Herstellung von Wendepunkt aufweisenden asphärischen Linsen für Vollformatsensoren stellt die Hersteller vor große Herausforderungen. Derartige Asphären lassen sich zwar für sehr kleine Durchmesser von wenigen Millimetern (typisch < 8mm) durch Blankpressen kostengünstig herstellen, nicht jedoch für die für eine Kamera mit Vollformatsensor benötigten sehr viel größeren Linsendurchmesser (typisch mindestens 25 mm bis 30 mm).

Es ist daher Aufgabe der vorliegenden Erfindung, ein vorteilhaftes Kameraobjektiv für Foto- oder Filmkameras mit Vollformatsensoren zur Verfügung zu stellen, das kompakt ist und eine höchste Abbildungsgüte aufweist.

Eine weitere Aufgabe der vorliegenden Erfindung ist es, eine vorteilhafte Foto- oder Filmkamera zur Verfügung zu stellen.

Die erste Aufgabe wird durch ein Kameraobjektiv nach Anspruch 1 gelöst. Die zweite Aufgabe wird durch eine Foto- oder Filmkamera nach Anspruch 28 gelöst. Die abhängigen Ansprüche enthalten vorteilhafte Ausgestaltungen der vorliegenden Erfindung.

Die vorliegende Erfindung offenbart ein Kameraobjektiv für eine Vollformatkamera mit einer ersten, objektseitig führenden Linsengruppe, einer zweiten Linsengruppe, die auf die erste Linsengruppe folgt, einer dritten, sensorseitig abschließenden Linsengruppe, die auf die zweite Linsengruppe folgt, und einer Aperturblende, die zwischen der ersten Linsengruppe und der zweiten Linsengruppe angeordnet ist. Dabei besitzt die erste Linsengruppe eine sammelnde Brechkraft. Die zweite Linsengruppe, die ebenfalls eine sammelnde Brechkraft aufweisen kann, umfasst wenigstens zwei entlang der optischen Achse beweglich angeordnete Linsen. Die dritte Linsengruppe weist wenigstens eine in Längsrichtung der optischen Achse fix angeordnete, vorzugsweise zumindest im optisch genutzten Bereich wendepunktfreie, asphärische Linse auf, die einen Durchmesser von mindestens 25 mm besitzt. Als asphärische Linse soll dabei eine Linse angesehen werden, die im optisch genutzten Bereich wenigstens einer der Linsenflächen asphärisch ausgebildet ist. insbesondere kann aber die asphärisch ausgebildete Linsenfläche auch über den optisch genutzten Bereich hinausgehen und die gesamte Linsenfläche ausmachen.

Das erfindungsgemäße Kameraobjektiv ermöglicht es, ein Kameraobjektiv zur Verfügung zu stellen, das auch für einen Vollformatsensor eine ausreichende Bildgüte, d.h. eine polychromatische Modulationstransferfunktion, bei der bei 80 Linienpaaren pro Millimeter ein Kontrast von über 50% erreicht wird, aufweist. Die polychromatische Modulationstransferfunktion ist dabei ein gewichteter Mittelwert über Modulationstransferfunktionen bei verschiedenen Wellenlängen. Außerdem besteht insbesondere, wenn die asphärische Linse wendepunktfrei ist, die Möglichkeit ein erfindungsgemäßes Objektiv ausschließlich aus sphärischen Linsen oder mittels Blankpressen herstellbaren asphärischen Linsen herzustellen, was eine kostengünstige Herstellung ermöglicht. Des Weiteren können bestimmte Anforderungen an die Position der Eintrittspupille der Optik erfüllt werden, wodurch die Randbedingungen für ein kompaktes Kameraobjektiv höchster Abbildungsgüte für eine Kamera mit Vollformatsensor erfüllbar sind.

Die zweite Linsengruppe kann entlang der optischen Achse mindestens eine objektseitige Teillinsengruppe sowie mindestens eine bildseitige Teillinsengruppe umfassen. Dabei weist die objektseitige Teillinsengruppe eine zerstreuende Brechkraft auf und die bildseitige Teillinsengruppe eine sammelnde Brechkraft.

Zudem können die objektseitige Teillinsengruppe und die bildseitige Teillinsengruppe entlang der optischen Achse unterschiedlich verschiebbar sein. Insbesondere können die objektseitige Teillinsengruppe und die bildseitige Teillinsengruppe derart verschiebbar angeordnet, dass sie sich bei einer Fokussierung auf kürzere Objektentfernungen in die gleiche Richtung bewegen. In der Regel bewegen sich beide Linsengruppen bei einer Fokussierung auf kürzere Objektentfernungen in dieselbe Richtung (auf die Objektseite zu). Beim Fokussieren auf geänderte Objektentfernungen können die Verschiebungswege der objektseitigen Teillinsengruppe und der bildseitigen Teillinsengruppe entlang der optischen Achse unterschiedlich sein. Insbesondere kann der Fokussierhub der bildseitigen Teillinsengruppe gegenüber dem Fokussierhub der objektseitigen Teillinsengruppe um einen Faktor zwischen 2 und 3 erhöht sein.

Gemäß einer Ausgestaltung des erfindungsgemäßen Kameraobjektivs umfasst die zweite Linsengruppe, insbesondere die bildseitige Teillinsengruppe der zweiten Linsengruppe, mindestens eine wenigstens im optisch genutzten Bereich asphärische Linse auf, die insbesondere zumindest im optisch genutzten Bereich wendepunktfrei sein kann. Wenn sie wenigstens im optisch genutzten Bereich wendepunktfrei ist, weist die asphärische Linse nur eine sammelnde bzw. positive Brechkraft oder eine zerstreuende bzw. negative Brechkraft auf. Eine Änderung des Vorzeichens der Brechkraft für unterschiedliche Bereiche eines Strahlenbündels, das durch die wendepunktfreie asphärische Linse tritt, ist bei einer wenigstens im optisch genutzten Bereich der asphärischen Flächen wendepunktfreien asphärischen Linse nicht gegeben. Insbesondere kann die wendepunktfreie asphärische Linse der zweiten Linsengruppe wie die wendepunktfreie asphärische Linse der dritten Linsengruppe so ausgestaltet sein, dass sie auch außerhalb des optisch genutzten Bereiches und insbesondere über die gesamte jeweilige Fläche wendepunktfrei und asphärisch ist.

Gemäß einer Ausgestaltung des erfindungsgemäßen Kameraobjektivs ist die mindestens eine asphärische Linse der zweiten Linsengruppe eine bi-asphärische Linse, also als Linse mit beidseitig asphärisch ausgeformten Flächen. Die bi-asphärische Linse weist gegenüber einer einfachen asphärischen Linse und erst recht gegenüber einer sphärischen Linse eine größere Anzahl an Freiheitsgraden auf. Korrekturen, die normalerweise auf mehrere Linsen verteilt werden, können somit durch eine einzige Linse vorgenommen werden. Das Nutzen einer bi-asphärischen Linse gegenüber einer einfachen asphärischen Linse oder sogar gegenüber einer sphärischen Linse in der zweiten Linsengruppe führt somit zu einer merklich geringeren Masse der zweiten Linsengruppe und damit zu einer schnellen Innenfokussierung mit Fokussierzeiten typischerweise kleiner oder gleich 100 ms. Die Masse der zu bewegenden Linsen der zweiten Linsengruppe beträgt vorzugsweise maximal 30 g und besonders bevorzugt maximal 20 g. Die damit auftretenden Beschleunigungskräfte erlauben somit den Einsatz handelsüblicher Aktorikmodule bei kurzen Fokussierzeiten.

Die mindestens eine asphärische Linse weist entlang ihrer asphärischen Fläche bzw. im Falle einer bi-asphärischen Linse entlang ihrer asphärischen Flächen vorzugsweise Anstiegswinkel kleiner oder gleich 60° auf. Derartige asphärische Linsen können durch gängige Herstellverfahren zum Blankpressen (molding) hergestellt werden. Die mindestens eine asphärische Linse kann daher aus einem zum Blankpressen geeigneten Glas niedriger Übergangstemperatur gebildet sein. Damit können sogenannte "Low Tg Glasses" genutzt werden.

Gemäß einer Ausgestaltung des erfindungsgemäßen Kameraobjektivs umfasst die mindestens eine asphärische Linse der zweiten Linsengruppe mindestens eine asphärische Fläche mit einer zum Rand hin eine starke Progredienz aufweisenden optischen Brechkraft. Dabei kann die Brechkraft eines Strahlenbündels am Feldrand gegenüber der Brechkraft eines Strahlenbündels in der Feldmitte um mindestens einen Faktor 5, und, insbesondere um mindestens einen Faktor 10, erhöht sein. Diese Form der mindestens einen asphärischen Linse ergibt sich hauptsächlich aus der Anforderung, die Einfallswinkel der äußeren Strahlbündel auf dem Sensor unter einen Grenzwert von 26° zu halten. Diese Asphäre dient damit weniger einer Korrektur klassischer Abbildungsfehler, sondern vielmehr der Erzeugung einer gewünschten Austrittspupillenlage des Objektivs.

In einer weiteren Ausgestaltung des erfindungsgemäßen Kameraobjektivs weist die sammelnde Brechkraft $P_V$ der ersten Linsengruppe mindestens ein 0,8-faches der Gesamtobjektivbrechkraft $P_{ges}$ ($P_V \geq 0{,}8 \cdot P_{ges}$), vorzugsweise mindestens ein 1,4-faches der Gesamtobjektivbrechkraft $P_{ges}$ ($P_V \geq 1{,}4 \cdot P_{ges}$) auf. Dabei ist die Gesamtobjektivbrechkraft gleich dem Kehrwert der Objektivbrennweite.

Eine stark sammelnde Linsengruppe vor und eine insgesamt zerstreuende Linsengruppe hinter der Aperturblende trägt zu einer, bei gleichzeitiger Einhaltung der vorgegebenen Brennweite, kurzen Baulänge bei.

Im erfindungsgemäßen Kameraobjektiv kann die erste Linsengruppe entlang der optischen Achse mindestens eine objektseitige Teillinsengruppe sowie mindestens eine bildseitige Teillinsengruppe umfassen, wobei die objektseitige Teillinsengruppe eine zerstreuende Brechkraft bzw. negative Brechkraft und die bildseitige Teillinsengruppe eine sammelnde bzw. positive Brechkraft aufweist. Diese Anordnung der Teillinsengruppen führt zu dem Ergebnis, dass der Quotient, bestehend aus dem Zähler mit dem Abstand vom ersten Linsenscheitel zum Mittelpunkt der Eintrittspupille (dem Ort im Strahlengang, an dem sich die objektseitig in das Kameraobjektiv einlaufenden Strahlbündel maximal überlappen) und dem Nenner mit der Baulänge des Kameraobjektivs, klein wird. Bei einer Normierung des Zählers auf 1 sind die Werte des Quotienten kleiner als 0,2, vorzugweise kleiner als 0,1. Dies bedeutet, dass die Eintrittspupille des Kameraobjektivs nahe an der ersten Linse liegt. In diesem Fall entspricht der Durchmesser, der notwendig ist, um alle Strahlbündel ohne Vignettierung durch das Objektiv zu übertragen, dem Durchmesser der Eintrittspupille selbst, und damit dem kleinstmöglichen Wert, der überhaupt möglich ist. Läge die Eintrittspupille dagegen innerhalb des Systems, wären zur vignettierungsfreien Übertragung aller Feldbündel größere Durchmesser der ersten Linse erforderlich. Bei einer Lage der Eintrittspupille fern der ersten Linse müsste daher die Vorsatzoptik größer und schwerer werden. Die Eintrittspupille nahe der Frontlinse führt somit dazu, dass man kompakte Vorsatzoptiken (Weitwinkel- und Televorsatzoptiken) für das Kameraobjektiv nutzen kann.

Gemäß einer Ausgestaltung des erfindungsgemäßen Kameraobjektivs ist die erste Linsengruppe entlang der optischen Achse unbeweglich angeordnet. Die zwischen der ersten Linsengruppe und der zweiten Linsengruppe angeordnete Aperturblende wird durch die unbewegliche erste Linsengruppe objektseitig abgebildet. Diese Abbildung stellt die Eintrittspupille dar, deren Lage bei unterschiedlichen Fokussierungen in Bezug zur optischen Achse konstant bleibt. Da die Eintrittspupillenlage beim Fokussieren konstant bleibt, erzeugt eine vorgeschaltete Vorsatzoptik somit keine stark von der Fokussierstellung abhängigen Fehleranteile.

Gemäß einer weiteren Ausgestaltung des erfindungsgemäßen Kameraobjektivs weist die wenigstens eine asphärische Linse der dritten Linsengruppe entlang ihrer asphärischen Flächen Anstiegswinkel kleiner oder gleich 60° auf. Der Anstiegswinkel bezeichnet dabei den Winkel der Flächentangente eines Flächenelements zur optischen Achse. Durch die Begrenzung der Anstiegswinkel auf den Asphärenflächen auf < 60° ist die asphärische Linse durch gängige Herstellverfahren zum Blankpressen herstellbar, wie dies mit Bezug auf die asphärische Linse der zweiten Linsengruppe beschrieben worden ist. Die wenigstens eine asphärische Linse der dritten Linsengruppe kann dann also insbesondere aus einem zum Blankpressen geeigneten Glas niedriger Übergangstemperatur gebildet sein. Damit können sogenannte "Low Tg Glasses" verwendet werden.

Die wenigstens eine asphärische Linse der dritten Linsengruppe kann zudem mindestens eine asphärische Fläche mit einer zum Rand hin eine starke Progredienz aufweisenden optischen Brechkraft umfassen. Dabei kann die Brechkraft eines Strahlenbündels am Feldrand der wenigstens einen asphärischen Linse der dritten Linsengruppe gegenüber der Brechkraft eines Strahlenbündels in der Feldmitte um mindestens einen Faktor 5, vorzugsweise um mindestens einen Faktor 10, erhöht sein. Wie bei der asphärischen Linse der zweiten Linsengruppe ergibt sich diese Form der wenigstens einen asphäreischen Linse hauptsächlich aus der Anforderung, die Einfallswinkel der äußeren Strahlbündel auf dem Sensor unter einen Grenzwert von 26° zu halten.

Weiterhin kann die wenigstens eine asphärische Linse der dritten Linsengruppe entlang der Strahlrichtung als bildseitig letzte Linse des Kameraobjektivs angeordnet sein. In einer Kompaktkamera mit einem integrierten Kameraobjektiv ist diese asphärische Linse typischerweise direkt vor dem Sensor fest verbaut. Bei der Nutzung von Wechselobjektiven bleibt diese asphärische Linse ein Bestandteil des Kameraobjektivs.

Gemäß einer Ausgestaltung des erfindungsgemäßen Kameraobjektivs kann die wenigstens eine asphärische Linse der dritten Linsengruppe eine bi-asphärische Linse sein, und insbesondere kann die dritte Linsengruppe ausschließlich aus der bi-asphärischen Linse bestehen. Das Verwenden nur einer Linse in der dritten Linsengruppe reduziert die Masse und die Länge des Kameraobjektivs.

Gemäß einer Ausgestaltung des erfindungsgemäßen Kameraobjektivs ist die Lage der Eintrittspupille an der ersten Linse durch die Bedingung $x/L \leq 0{,}2$ gegeben. Hierbei bezeichnen x den Abstand vom ersten Linsenscheitel zum Mittelpunkt der Eintrittspupille und L die Baulänge des Kameraobjektivs. Bevorzugt ist der Quotient x/L maximal 0,2 und besonders bevorzugt maximal 0,1. Diese Ausgestaltung ist insbesondere im Hinblick auf die Verwendung des Kameraobjektivs zusammen mit einer Vorsatzoptik vorteilhaft, wie weiter oben bereits erläutert worden ist.

Das erfindungsgemäße Kameraobjektiv ist insbesondere auf die Verwendung zusammen mit Vorsatzoptiken ausgelegt. Vorsatzoptiken sind dabei Weitwinkel- bzw. Televorsatzoptiken. Die Verwendbarkeit in Verbindung mit Vorsatzoptiken ist durch zwei Merkmale des erfindungsgemäßen Kameraobjektivs sichergestellt. Erstens erfolgt die Innenfokussierung ausschließlich durch Linsenbewegungen hinter der Aperturblende, da dann die Eintrittspupillenlage beim Fokussieren konstant bleibt und die Vorsatzoptik somit keine stark von der Fokussierstellung abhängigen Fehleranteile erzeugt. Zweitens liegt die Eintrittspupille des Grundobjektivs sehr nah an der ersten Linse. Dadurch kann der erforderliche Durchmesser der Vorsatzoptik minimiert werden, ohne dass durch die Vorsatzoptik ein zusätzlicher Beschnitt des Abbildungsbündels auftritt. Der zusätzliche Beschnitt wird auch als Vignettierung bezeichnet. Der zusätzliche Beschnitt tritt auf, wenn die Randstrahlen, die vom Sensor noch detektiert werden können, durch eine zusätzliche Optik vor dem Kameraobjektiv blockiert werden. Die vorliegende Erfindung betrifft daher auch die Verwendung eines erfindungsgemäßen Kameraobjektivs zusammen mit einer vorgeschalteten Vorsatzoptik.

Des Weiteren betrifft die Erfindung eine Foto- oder Filmkamera mit einem erfindungsgemäßen Kameraobjektiv. Die mit der erfindungsgemäßen Foto- oder Filmkamera zu erzielenden Vorteile ergeben sich aus den oben beschriebenen Vorteilen des erfindungsgemäßen Kameraobjektivs.

Weitere Merkmale, Eigenschaften und Vorteile der vorliegenden Erfindung ergeben sich aus den nachfolgenden Ausführungsbeispielen unter Bezugnahme auf die beiliegenden Figuren.

| | |
|---|---|
| Figur 1 | zeigt ein erfindungsgemäßes Kameraobjektiv 1 eines ersten Ausführungsbeispiels mit einer Fokussiereinstellung auf unendlich. |
| Figur 2 | zeigt das erfindungsgemäße Kameraobjektiv 1 des ersten Ausführungsbeispiels mit einer Fokussiereinstellung auf eine Naheinstellgrenze von 30 cm. |
| Figur 3 | zeigt die Modulationstransferfunktion in Abhängigkeit der Bildhöhe für das Kameraobjektiv 1 des ersten Ausführungsbeispiels. |
| Figur 4 | zeigt den Öffnungsfehler, den Astigmatismus und die Verzeichnung für das Kameraobjektiv 1 des ersten Ausführungsbeispiels. |
| Figuren 5, 6 | zeigen Queraberrationsdiagramme für das Kameraobjektiv 1 des ersten Ausführungsbeispiels. |
| Figur 7 | zeigt ein erfindungsgemäßes Kameraobjektiv 1 eines zweiten Ausführungsbeispiels in der Position einer Fokussierung auf unendlich. |

Figur 8 zeigt das erfindungsgemäße Kameraobjektiv 1 des zweiten Ausführungsbeispiels mit einer Fokussierung auf die Naheinstellgrenze von 23 cm.

Figur 9 zeigt die Modulationstransferfunktion des Kameraobjektivs 1 des zweiten Ausführungsbeispiels in Abhängigkeit der Bildhöhe.

Figur 10 zeigt den Öffnungsfehler, den Astigmatismus und die Verzeichnung für das Kameraobjektiv 1 des zweiten Ausführungsbeispiels.

Figuren 11, 12 zeigen die Queraberrationsdiagramme für das Kameraobjektiv 1 des zweiten Ausführungsbeispiels.

Figur 13 zeigt eine Kamera mit einem Objektiv und einem optionalen Vorsatzobjektiv in einer schematischen Darstellung.

Nachfolgend werden anhand der Figuren zwei Ausführungsbeispiele für ein kompaktes Kameraobjektiv 1 höchster Abbildungsgüte für eine Kamera mit einem Vollformatsensor beschrieben.

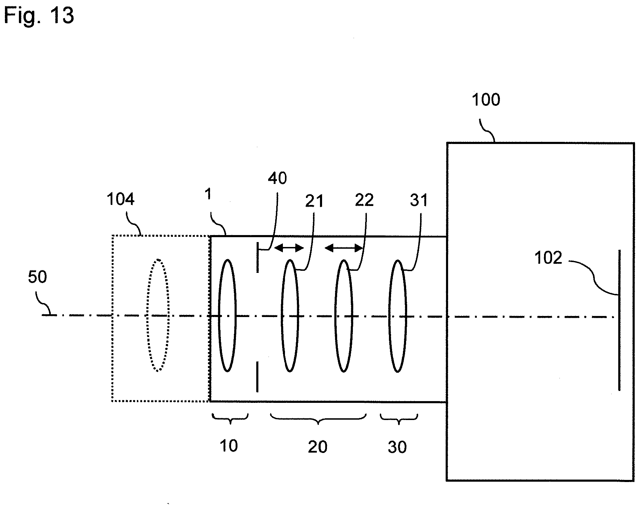

Die vorliegende Erfindung stellt ein Kameraobjektiv 1 für eine Kamera 100 mit einem Vollformatsensor 102 zur Verfügung. Die Kamera 100 mit dem Kameraobjektiv 1 und einer optionalen Vorsatzoptik 104 ist schematisch in Figur 13 dargestellt. Die optionale Vorsatzoptik 104 kann hierbei eine Weitwinkelvorsatzoptik oder eine Televorsatzoptik sein. Das Kameraobjektiv 1 ist sehr kompakt und weist eine höchste Bildgüte auf. Als Vollformatsensoren werden Sensoren 102 bezeichnet, die einen Bildkreisdurchmesser von 43,2 mm aufweisen.

Das Kameraobjektiv 1 weist drei Linsengruppen 10, 20, 30 auf, von denen die erste, objektseitig führende Linsengruppe 10 eine oder mehrere Linsen umfasst und eine sammelnde Brechkraft besitzt. Auf die erste Linsengruppe 10 folgt bildseitig die zweite Linsengruppe 20. Diese umfasst wenigstens zwei Linsen 21, 22, die entlang der optischen Achse 50 beweglich angeordnet sind, wie in Figur 13 durch Doppelpfeile angedeutet ist. Die dritte Linsengruppe 30 folgt bildseitig auf die zweite Linsengruppe 20 und stellt die sensorseitig abschließende Linsengruppe des Kameraobjektivs 1 dar. Sie umfasst wenigstens eine in Längsrichtung der optischen Achse 50 fix angeordnete asphärische Linse 31 mit einem Durchmesser von mindestens 25 mm. Zwischen der ersten Linsengruppe 10 und der zweiten Linsengruppe 20 ist eine Aperturblende 40 angeordnet.

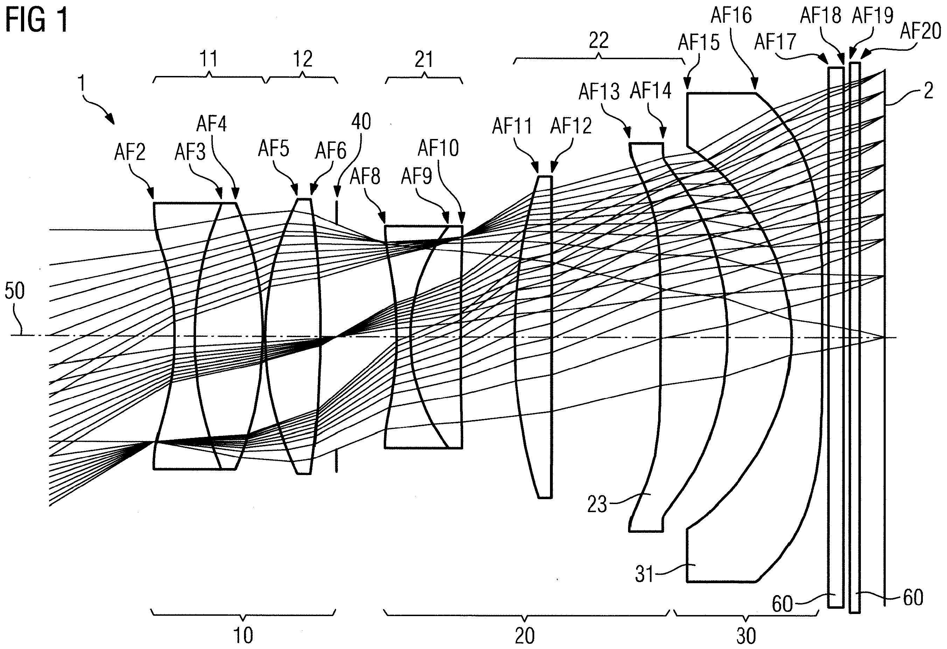

Ein erstes konkretes Ausführungsbeispiel für das erfindungsgemäße Kameraobjektiv 1 ist in der Figur 1 gezeigt. Das Kameraobjektiv 1 in der Figur 1 weist eine 8-linsige Variante auf, die eine Öffnungszahl von 2,0 und eine Brennweite von 35mm aufweist. Die Baulänge des Kameraobjektivs 1 des ersten Ausführungsbeispiels beträgt nur 57 mm, gemessen entlang der Scheitelpunkte der Linsen auf der optischen Achse 50 von der ersten Linse bis zum Bildsensor. Die hierbei abgemessenen 57 mm für ein Kameraobjektiv 1 einer Kamera mit Vollformatsensor sind extrem kompakt im Vergleich zu Kameraobjektiven für Kameras mit Vollformatsensoren und ähnlicher Bildgüte. Das erfindungsgemäße Kameraobjektiv 1 des ersten Ausführungsbeispiels erfüllt die eingangs erwähnte Bedingung, dass die Baulänge auf kleiner oder gleich dem 1,5-fachen des Bildkreisdurchmessers begrenzt ist. Da der Bildkreisdurchmesser 43,2 mm groß ist, dürfte ein besonders kompaktes Kameraobjektiv 1 die Baulänge von 64,8 mm nicht überschreiten. Das erfindungsgemäße Kameraobjektiv 1 des ersten Ausführungsbeispiels weist eine Baulänge von 57,00 mm auf.

Das in Figur 1 dargestellte Kameraobjektiv 1 weist acht Linsen auf. Diese acht Linsen sind in drei Linsengruppen 10, 20, 30 unterteilt. Die erste Linsengruppe 10 weist drei Linsen auf, wohingegen die zweite Linsengruppe 20 vier Linsen und die dritte Linsengruppe 30 nur eine Linse aufweist. Zwischen der ersten Linsengruppe 10 und der zweiten Linsengruppe 20 ist eine Aperturblende 40 angeordnet. Sowohl die erste Linsengruppe 10, als auch die einzelne Linse der dritten Linsengruppe 30 sind unbeweglich in Bezug zur optischen Achse 50 angeordnet. Die zweite Linsengruppe 20 ist hingegen beweglich in Bezug zur optischen Achse 50 angeordnet.

Die aus drei Linsen bestehende erste Linsengruppe 10 unterteilt sich noch einmal in zwei Teillinsengruppen, die zum einen als bildseitige Teillinsengruppe 12 und zum anderen als objektseitige Teillinsengruppe 11 bezeichnet wird. Die objektseitige Teillinsengruppe 11 umfasst zwei Linsen, zum einen eine objektseitige Bikonkavlinse und eine bildseitige Bikonvexlinse. Beide Linsen sind miteinander verkittet. Die zwei verkitteten Linsen der objektseitigen Teillinsengruppe 11 der ersten Linsengruppe 10 weisen eine zerstreuende bzw. negative Gesamtbrechkraft auf.

Die bildseitige Teillinsengruppe 12 der ersten Linsengruppe 10 umfasst in dem ersten Ausführungsbeispiel nur eine einzelne Sammellinse. Diese einzelne Sammellinse ist eine Bikonkavlinse, wobei der bildseitige Krümmungsradius gegenüber dem objektseitigen Krümmungsradius um ein Vielfaches vergrößert ist.

Die erste Linsengruppe 10 bildet die Aperturblende 40 objektseitig ab. Dabei beträgt die Brechkraft der ersten Linsengruppe ein 1.415-faches der Kameraobjektiv-Gesamtbrechkraft. Aufgrund dessen, dass die erste Linsengruppe 10 in Bezug zur optischen Achse 50 unbeweglich angeordnet ist, ist die objektseitige Abbildung der Aperturblende 40, die sogenannte Einrittspupille, in ihrer Lage und in ihrer Größe konstant in Bezug zur optischen Achse 50. Bei der Verwendung einer Vorsatzoptik werden hierdurch mit der Objektentfernung variierende Bildfehler vermieden. Würde die Eintrittspupillenlage variieren, entstünden fokussierstellungsabhängige Bildfehler der Vorsatzoptik; man spricht in diesem Zusammenhang auch von durch die Eintrittspupillenlage "induzierten Bildfehlern", da durch die Variation der Eintrittspupillenlage der Pfad der zur Abbildung beitragenden Strahlenwege durch die Vorsatzoptik variiert. Diese Bildfehler wären nicht kompensierbar, da in der Vorsatzoptik keine beweglichen optischen Elemente vorgesehen sind.

Die Eintrittspupille des Kameraobjektivs 1 liegt auf der objektseitigen Seite nahe der objektseitigen bikonkaven Linse der objektseitigen Teillinsengruppe 11 der ersten Linsengruppe 10. Der erforderliche Durchmesser einer Vorsatzoptik kann dadurch minimiert werden, ohne dass durch die Vorsatzoptik ein zusätzlicher Beschnitt der Abbildungsbündel, welcher als Vignettierung bezeichnet wird, auftritt.

In diesem Ausführungsbeispiel ist die Aperturblende 40 in Bezug zur optischen Achse 50 fest angeordnet, so dass auch durch die Aperturblende 40 keine Änderung der Lage und der Größe der Eintrittspupille verursacht wird.

In diesem Ausführungsbeispiel umfasst die zweite Linsengruppe 20 wie bereits erwähnt vier Linsen. Diese zweite Linsengruppe 20 lässt sich wiederum in zwei Teillinsengruppen, nämlich in eine objektseitige Teillinsengruppe 21 und in eine bildseitige Teillinsengruppe 22, unterteilen. Die objektseitige Teillinsengruppe 21 umfasst zwei Linsen. Die objektseitige Linse der beiden Linsen ist eine Bikonkavlinse, wohingegen die bildseitige Linse der beiden Linsen eine konkav-konvexe Linse, eine sogenannte Meniskuslinse, ist. In dem vorliegenden ersten Ausführungsbeispiel ist die konkav-konvexe Linse eine positive Meniskuslinse. Die Seite mit dem kleineren Krümmungsradius der positiven Meniskuslinse zeigt in Richtung des Objektes. Die bikonkave Linse und die positive Meniskuslinse sind miteinander verkittet. Die Gesamtbrechkraft der beiden verkitteten Linsen ist negativ bzw. zerstreuend.

Die bildseitige Teillinsengruppe 22 der zweiten Linsengruppe 20 umfasst auch zwei Linsen. Die objektseitige Linse der Teillinsengruppe 22 ist eine bikonvexe Linse, deren stärkere Krümmung in Richtung des Objektes zeigt. Die bildseitige Linse dieser Teillinsengruppe 22 ist wieder eine positive Meniskuslinse. Beide Linsen der bildseitigen Teillinsengruppe 22 weisen einen größeren Abstand zueinander auf und sind nicht miteinander verkittet. Während der Fokussierung wird der Abstand zwischen den beiden Linsen konstant gehalten. Die Gesamtbrechkraft der bildseitigen Teillinsengruppe ist positiv bzw. sammelnd.

Die dritte Linsengruppe 30 in dem ersten Ausführungsbeispiel umfasst nur eine einzelne Linse. Diese einzelne konkav konvexe Linse ist eine spezielle negative Meniskuslinse. Die negative Meniskuslinse weist zusätzlich eine Abflachung auf der konvexen Seite auf und zeigt mit ihrer abgeflachten konvexen Seite in Richtung des Sensors. In diesem Ausführungsbeispiel kann die einzelne Meniskuslinse fest vor dem Sensor verbaut sein, wenn es sich bei dem Objektiv nicht um ein Wechselobjektiv handelt. Sie dient zur Einstellung der am Sensor 2 gewünschten Austrittspupillenlage.

Die gesamte Brechkraft der zweiten und der dritten Linsengruppe, also sämtlicher Linsen nach der Aperturblende, beträgt ein -1.055-faches der Kameraobjektiv-Gesamtbrechkraft.

In dem ersten Ausführungsbeispiel werden zwei bi-asphärische Linsen 23, 31 verwendet. Eine bi-asphärische Linse 23 wird in der bildseitigen Teillinsengruppe 22 der zweiten Linsengruppe 20 verwendet. Die bildseitige Linse 23 dieser Linsengruppe 22 ist eine bi-asphärische Linse 23 in Form der vorgenannten positiven Meniskuslinse 23. Eine weitere bi-asphärische Linse 31 wird in der dritten Linsengruppe 30 verwendet. Diese einzelne Linse 31 ist eine bi-asphärische Linse 31 in Form einer negativen Meniskuslinse 31.

Die zwei asphärischen Linsen 23, 31 weisen im vorliegenden Ausführungsbeispiel auf ihren asphärischen Flächen AF13, AF 14, AF15 und AF16 Formen auf, die zumindest im optisch genutzten Bereich der Flächen, insbesondere jedoch auf der gesamten Fläche, keine Wendepunkte aufweisen. Die Anstiegswinkel der Asphärenflächen sind überall auf jeder Fläche < 60°. Die asphärischen Linsen 23, 31 können damit durch gängige Herstellverfahren zum Blankpressen hergestellt werden. Dieses Blankpressen wird auch als "Molding" bezeichnet. Ferner sind die asphärischen Linsen 23, 31 aus einem zum Blankpressen geeigneten Glas mit niedriger Übergangstemperatur gebildet. Für diese asphärischen Linsen 23, 31 werden hier "Low Tg Glasses" verwendet.

Des Weiteren weisen die Flächen AF13 und AF16 der asphärischen Linsen 23, 31 jeweils eine optische Brechkraft mit einer eine zum Rand hin starken Progredienz auf. Die Brechkraft der jeweiligen Asphärenfläche mit zum Rand hin starker Progredienz der asphärischen Linsen 23, 31 ist für das optische Strahlenbündel am Feldrand mindestens 5-fach, vorzugsweise 10-fach, größer als für ein Strahlenbündel in der Mitte des Feldes.

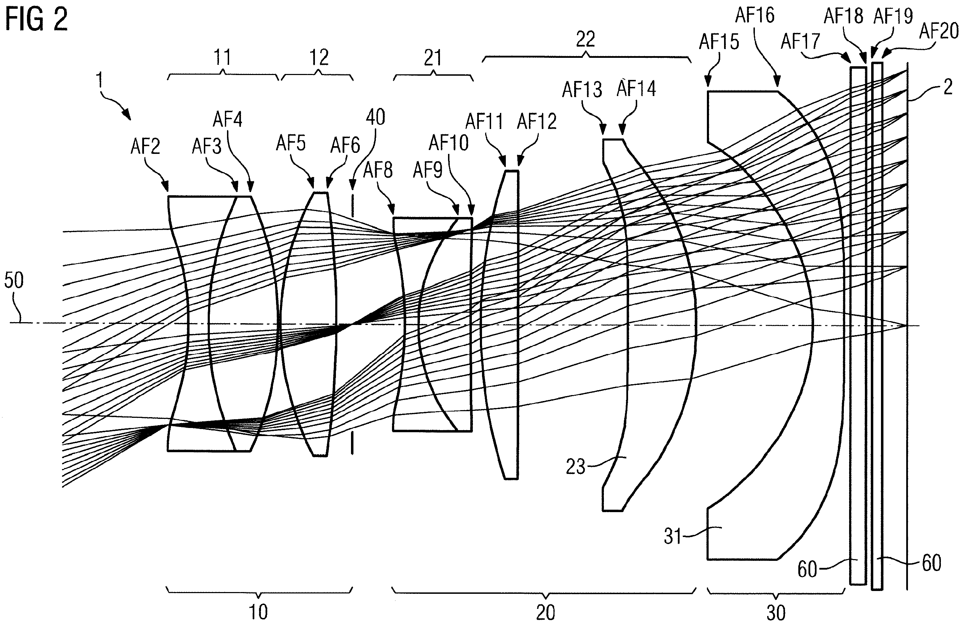

In Figur 2 ist das gleiche Kameraobjektiv 1 des ersten Ausführungsbeispiels dargestellt. In Figur 1 ist das Kameraobjektiv 1 auf unendlich fokussiert, wohingegen das Kameraobjektiv 1 in Figur 2 auf eine Naheinstellgrenze von 30 cm eingestellt ist. Die Naheinstellgrenze wird angegeben als Abstand zwischen Objekt und Sensor. Aufgrund dessen, dass die erste Linsengruppe 10 und die dritte Linsengruppe 30 sowie die Aperturblende 40 unbeweglich in Bezug zur optischen Achse 50 angeordnet sind, ist ein Unterschied in dem Kameraobjektiv 1 nur in der zweiten Linsengruppe 20 zu erkennen. Sowohl die objektseitige Teillinsengruppe 21 als auch die bildseitige Teillinsengruppe 22 der zweiten Linsengruppe 20 wurden in Richtung des Objekts bewegt. Der jeweilige Verschiebeweg der beiden Teillinsengruppen 21, 22 ist jedoch unterschiedlich. Im vorliegenden Ausführungsbeispiel ist der Verschiebeweg der bildseitigen Teillinsengruppe 22 ist größer als der Verschiebeweg der objektseitigen Teillinsengruppe 21. Bei einer Fokussierung des Kameraobjektivs 1 auf die Naheinstellgrenze von 30 cm sind die beiden Teillinsengruppen 21, 22 enger beieinander als bei einer Fokussierung auf unendlich.

Die Anordnung der objektseitigen Teillinsengruppe 21 und der bildseitigen Teillinsengruppe 22 der zweiten Linsengruppe 20 lässt eine schnelle Fokussierung zu. Fokussierzeiten von unter 100 ms werden hierbei erreicht. Das Kameraobjektiv 1 verfügt damit über eine schnelle Innenfokussierung über einen großen Objektentfernungsbereich. Zusätzlich bleibt im Naheinstellbereich eine hohe Bildgüte erhalten. Die Gesamtmasse der zu bewegenden Linsen hat im vorliegenden Ausführungsbeispiel ein maximales Gewicht von 20 g bis 30 g.

Zudem sind in der Figur 1 und in der Figur 2 zwei Filter 60 zwischen dem Kameraobjektiv 1 und dem Sensor 2 dargestellt. Diese Filter 60 gehören nicht zum Kameraobjektiv 1, sind jedoch hinsichtlich Dicke und Brechungsindex bei der Auslegung des Objektivs berücksichtigt.

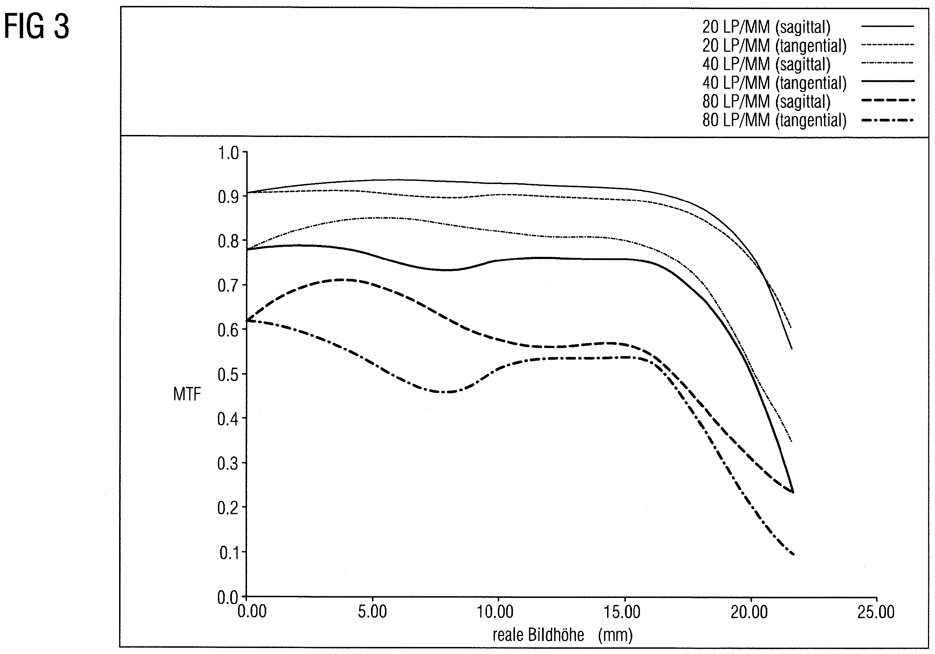

In Figur 3 ist ein Diagramm dargestellt, in dem die Modulationstransferfunktion (MTF) über der Bildhöhe aufgetragen ist. In diesem Diagramm der Figur 3 sind drei Kurvenpaare der Modulationstransferfunktion dargestellt, die von dem Parameter "Linienpaaren pro Millimeter" abhängig sind. Für jedes Kurvenpaar wird der Parameter "Linienpaare pro Millimeter" für einen bestimmten Wert konstant gehalten. Das erste Kurvenpaar bildet die Modulationstransferfunktion für 20 Linienpaare pro Millimeter ab, das zweite Kurvenpaar bildet die Modulationstransferfunktion bei 40 Linienpaaren pro Millimeter ab, wohingegen das dritte Kurvenpaar die Modulationstransferfunktion bei 80 Linienpaaren pro Millimeter abbildet. Jedes einzelne Kurvenpaar besteht aus zwei weiteren Kurven. Die erste der beiden Kurven zeigt den Sagittalanteil des einfallenden Lichtes, wohingegen die zweite Kurve den Tangentialanteil des einfallenden Lichtes aufzeigt.

Die MTF-Kurven zeigen, dass bis zu einer Bildhöhe von 12 mm (vertikale Formatkante) bzw. sogar 18 mm (horizontale Formatkante) bei 80 Linienpaaren pro Millimeter und damit bei allen niedrigeren Ortsfrequenzen jeweils ein hoher Kontrast von zumeist mindestens 50% vorhanden ist, der erst zur äußersten Bildecke hin (Bildhöhen > 18 mm) abfällt. Lediglich der Tangentialanteil weist im Bereich zwischen ca. 5mm Bildhöhe und 10 mm Bildhöhe einen geringfügig niedrigeren Wert auf. Ein solcher Kontrastabfall ist in der Praxis akzeptabel, da Bildhöhen jenseits von 18 mm nur einen äußerst kleinen Teil der Sensorfläche repräsentieren, eben nur die äußersten Bildecken.

Das Kurvenpaar mit 20 Linienpaaren pro Millimeter hat in dem Bereich der Bildhöhe zwischen 0 mm und ca. 16 mm einen Kontrast von ca. 90 %. Der Sagittal- und der Tangentialanteil des einfallenden Lichtes unterscheiden sich nur minimal.

Eine etwas größere Aufspaltung des Sagittal- gegenüber dem Tangentialanteil ist für das Kurvenpaar mit 40 Linienpaaren pro Millimeter gegeben. Hierbei weist der sagittale Anteil einen Kontrast etwas über 80 % und der tangentiale Anteil einen Kontrast etwas unter 80 % auf. Dies gilt insbesondere für die Bildhöhe zwischen 0 mm und 11 mm. Einen ähnlichen Kontrast weisen beide Anteile zwischen 11 mm und 16 mm Bildhöhe auf. Hierbei verlaufen die Kurven sehr nah der 80 %-Linie.

Obwohl der Unterschied im Kontrast bei dem Kurvenpaar mit 80 Linienpaaren pro Millimeter im Bereich zwischen 0 mm und 10 mm der Bildhöhe am größten ist gegenüber den anderen Kurvenpaaren, ist der Kontrast des sagittalen und des tangentialen Anteils zwischen 11 mm und 16 mm Bildhöhe fast gleich. Die beiden Kurven weisen hierbei einen Kontrast von ca. 55 % auf.

Damit erfüllt das Kameraobjektiv 1 die eingangs erwähnte Bedingung, dass die Bildgüte bereits bei voller Objektivöffnung, bei einer Aperturblende 40 von 2.0, auf außergewöhnlich hohem Niveau liegt. Bei Abblenden des Kameraobjektivs 1 bzw. der Aperturblende 40 auf 4.0 erhöht sich der Kontrast weiter, so dass das Kameraobjektiv 1 dann nahezu beugungsbegrenzt abbildet.

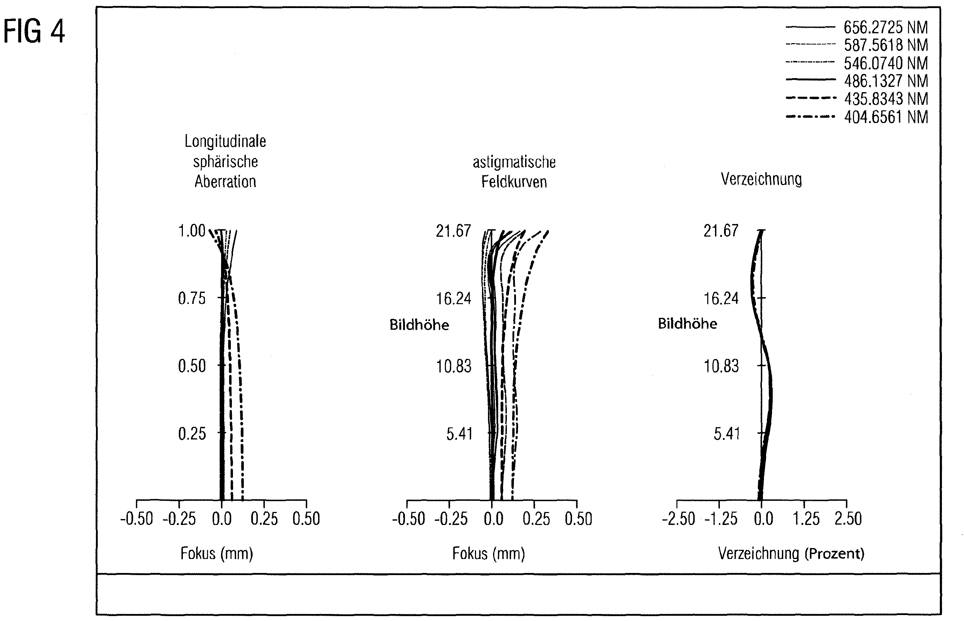

In der Figur 4 sind die üblichen Bildfehlerdarstellungen abgebildet. In dem linken Diagramm der Figur 4 ist der Öffnungsfehler dargestellt. Zur Beschreibung des Öffnungsfehlers gibt man die Einfallshöhe als Funktion von der Schnittweitendifferenz bzw. von dem Fokus an. In diesem Diagramm wurde der Öffnungsfehler für unterschiedliche Wellenlängen des sichtbaren Lichtes dargestellt. Dabei reicht der Bereich des sichtbaren Lichtes von 404.6561 nm bis 656.2725 nm. In dem linken Diagramm der Figur 4 erkennt der Fachmann die gute Korrektur des Öffnungsfehlers. Bis auf den Bereich der kleineren Wellenlängen ist der Öffnungsfehler außergewöhnlich gut korrigiert.

In dem mittleren Diagramm der Figur 4 ist der Abbildungsfehler Astigmatismus dargestellt. Zur Beschreibung des Astigmatismus wird die Bildhöhe als Funktion von der Schnittweitendifferenz bzw. dem Fokus dargestellt. Es ist zu erkennen, dass für größere Wellenlängen des sichtbaren Lichtes der Astigmatismus außergewöhnlich gut korrigiert wurde. Nur für kleinere Wellenlängen des sichtbaren Lichtes tritt der Astigmatismus deutlicher zutage. Der genutzte Bereich der Wellenlängen im sichtbaren Licht ist mit denen im linken Diagramm identisch.

In dem rechten Diagramm der Figur 4 ist der Verlauf der Verzeichnung über die Bildhöhe aufgetragen. In diesem Diagramm ist eine gute Korrektur der Verzeichnung zu erkennen. Die wellenlängenabhängige Änderung der Verzeichnung entspricht der chromatischen Vergößerungsdifferenz CHV, die oft als "Farbquerfehler" bezeichnet wird. Man sieht, neben der äußerst geringen Verzeichnung von weniger als 0.5% (bei jeder Wellenlänge) somit auch, dass das Objektiv nur eine extrem geringe CHV aufweist. Eine größere CHV würde sich im Bild durch störende Farbsäume an kontrastreichen Kanten bemerkbar machen. Der genutzte Bereich der Wellenlängen im sichtbaren Licht ist mit denen im linken Diagramm identisch.

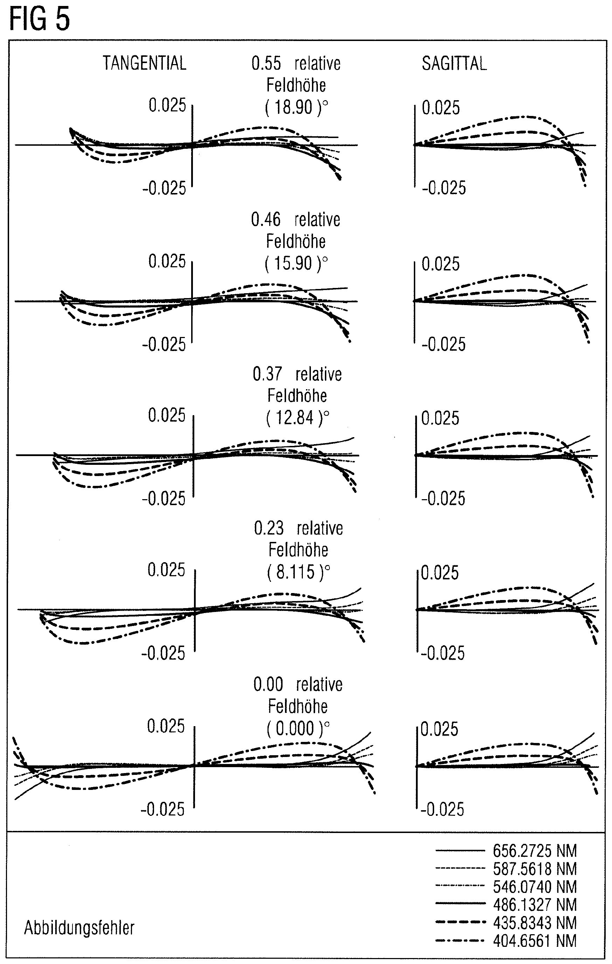

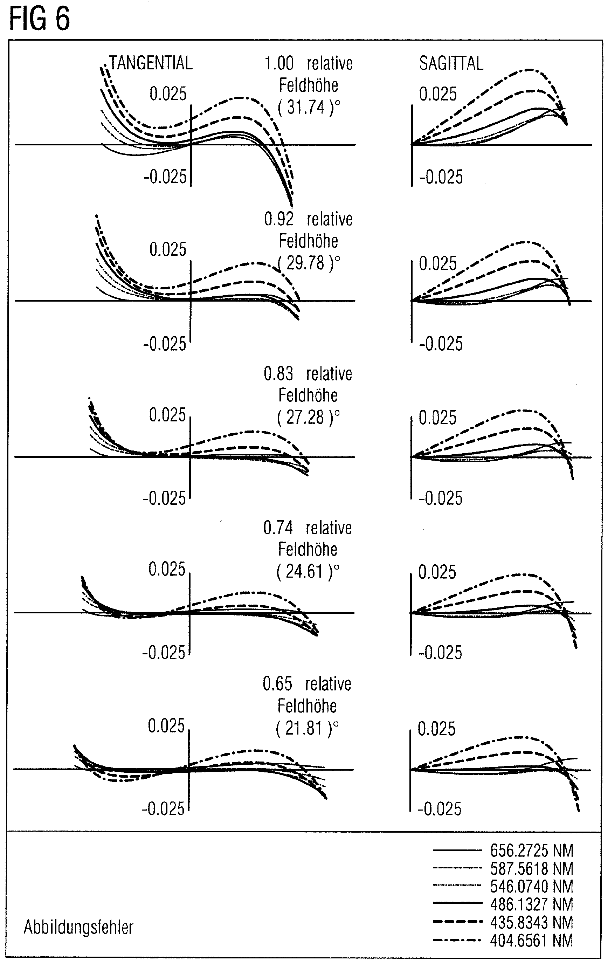

In den Fig. 5 und 6 sind die zugehörigen Darstellungen der üblichen Queraberrationsdiagramme dargestellt. In den Diagrammen der Figuren 5 und 6 sind der tangentiale und der sagittale Anteil des einfallenden Lichtes dargestellt.

Die hierbei benutzte Wellenlänge liegt in dem Bereich zwischen 404.6561 nm und 656.2725 nm. Ein Fachmann auf dem Gebiet der Optik kann hieraus den Verlauf der Bildfehler über der Apertur und dem Feld lesen. Insbesondere die extrem gute Korrektur der chromatischen Bildfehler lässt sich aus den Figuren 5 und 6 entnehmen.

In der nachfolgenden Tabelle 1 sind die Konstruktionsgrunddaten des Objektivs angegeben. Die Flächen der Linsen AF2 bis AF20 sind in den Figuren 1 und 2 dargestellt.

Tabelle1 :

| Fläche | FlächenTyp | Scheitelradius der Flächenkrümmung | Abstand zur Folgefläche (Luftabstand bzw. Linsendicke) | Handelsbezeichnung mit Herstellerangabe | Halber Durchmesser der optisch genutzten Fläche |
|---|---|---|---|---|---|
| Objekt | sphärisch | unendlich | unendlich | | |
| AF1 | sphärisch | unendlich | 10.00000 | | 13.81912 |
| AF2 | sphärisch | -23.31930 | 1.60000 | STIH6_OHARA | 8.55000 |
| AF3 | sphärisch | 27.53319 | 5.50000 | SLAM61_OHARA | 9.38782 |
| AF4 | sphärisch | -27.53319 | 0.20000 | | 9.80123 |
| AF5 | sphärisch | 24.92030 | 4.40000 | SNPH1_OHARA | 10.12667 |
| AF6 | sphärisch | -81.82505 | 1.30000 | | 9.87401 |
| Apertur 40 | sphärisch | unendlich | 4.80480 | | 9.10000 |
| AF8 | sphärisch | -32.17761 | 1.10000 | STIH1_OHARA | 7.65000 |
| AF9 | sphärisch | 14.49702 | 4.10000 | SFPM2_OHARA | 7.88802 |
| AF10 | sphärisch | 370.02251 | 4.26298 | | 8.10000 |
| AF11 | sphärisch | 44.10411 | 3.00000 | SLAH59_OHARA | 11.73325 |
| AF12 | sphärisch | -1857.77292 | 8.71275 | | 11.94034 |
| AF13 | asphärisch | unendlich | 5.40000 | SFPM2_OHARA | 13.80054 |
| AF14 | asphärisch | -24.95694 | 5.11947 | | 14.53752 |
| AF15 | asphärisch | -17.01007 | 2.50000 | LLAM69_ OHARA | 14.96886 |
| AF16 | asphärisch | unendlich | 0.50000 | | 18.47620 |
| AF17 | sphärisch | unendlich | 1.20000 | BK7_ Schott | 20.17427 |
| AF18 | sphärisch | unendlich | 0.50000 | | 20.46500 |
| AF19 | sphärisch | unendlich | 0.80000 | BK7_ Schott | 20.66304 |
| AF20 | sphärisch | unendlich | 2.00000 | | 20.86325 |
| Image | sphärisch | unendlich | 0.00000 | | 21.67233 |

Die Zeilen zeigen, von oben nach unten, die mit Figur 1 bzw. 2 korrespondierenden Flächennummern der Linsen. Die Spalten zeigen, von links nach rechts, den Flächentyp (sphärisch oder asphärisch), den Scheitelradius der Flächenkrümmung, den Abstand zur Folgefläche (den Luftabstand respektive die Linsendicke), die Handelsbezeichnung des verwendeten optischen Glases mit Herstellerangabe und den halben Durchmesser der optisch genutzten Fläche.

Die Brennweite der Optik beträgt exakt 35.00 mm bei einer Objektentfernung gleich unendlich. Bei einer Fokussierung auf andere Objektentfernungen ändern sich die Lufträume der Flächen AF7, AF10 und AF14 gemäß Tabelle 2 (zwischen den explizit angegebenen Entfernungen ist entsprechend zu interpolieren). Die Fläche 0 in der folgenden Tabelle ist die Ebene des Objektes.

Tabelle2:

| | Stellung Z1 | Stellung Z2 | Stellung Z3 | Stellung Z4 |
|---|---|---|---|---|
| 0 | unendlich | 933 | 433 | 233 |
| AF7 | 4.80480 | 4.68058 | 4.49618 | 4.12952 |
| AF10 | 4.26298 | 3.30344 | 2.27983 | 0.80000 |
| AF14 | 5.11947 | 6.20323 | 7.41125 | 9.25773 |

In den vier Tabellen 3, 4, 5, 6 sind die Koeffizienten der asphärischen Flächen gemäß der Definitionsgleichung der Scheitelpunktform angegeben. Dabei zeigen Tabelle 3 die Asphären-Koeffizienten der Fläche AF13, Tabelle 4 die Asphären-Koeffizienten der Fläche AF14, Tabelle 5 die Asphären-Koeffizienten der Fläche AF15 und Tabelle 6 die Asphären-Koeffizienten der Fläche AF16 des ersten Ausführungsbeispiels.

Die Scheitelpunktform wird beschrieben durch die Gleichung:

$$z := \frac{r^2/R}{1+\sqrt{1-(1+k)*\frac{r^2}{R^2}}} + Ar^4 + Br^6 + Cr^8 + Dr^{10} + Er^{12} + Fr^{14} + Gr^{16} + Hr^{18} + Jr^{20}$$

wobei z die Pfeilhöhe, R den Scheitel-Krümmungsradius der Linsen, r den radialen Abstand mit $r = \sqrt{x^2 + y^2}$, k die Kegelschnittkonstante und A,B,C,D,E,F,G,H,J den Verformungskoeffizienten der jeweiligen Ordnung bezeichnen. Bei sphärischen Linsen sind A=B=C=D=E=F=G=H=J=0 sowie k=0.

Tabelle3:

| Parameter | Wert |
|---|---|
| Scheitelradius | unendlich |
| "Conic"-Konstante | 0.00 |
| 4.Ordnung - Koeffizient A | -4.8992092861 e-05 |
| 6.Ordnung - Koeffizient B | 6.1949699715e-10 |
| 8.Ordnung - Koeffizient C | -1.2500220906e-09 |
| 10.Ordnung - Koeffizient D | 5.6567321954e-12 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 4:

| Parameter | Wert |
|---|---|
| Scheitelradius | -2.4956943999e+01 |
| "Conic"-Konstante | 0.00 |
| 4.Ordnung - Koeffizient A | -1.0662530350e-05 |
| 6.Ordnung - Koeffizient B | -9.6382651819e-09 |

(fortgesetzt)

| Parameter | Wert |
|---|---|
| 8.Ordnung - Koeffizient C | -6.8821065476e-10 |
| 10.Ordnung - Koeffizient D | 3.3476497962e-12 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 5

| Parameter | Wert |
|---|---|
| Scheitelradius | -1.7010065377e+01 |
| "Conic"-Konstante | 0.00 |
| 4.Ordnung - Koeffizient A | 1.0710823842e-05 |
| 6.Ordnung - Koeffizient B | 3.2153423282e-08 |
| 8.Ordnung - Koeffizient C | 3.3940082833e-10 |
| 10.Ordnung - Koeffizient D | -7.0524303110e-13 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 6:

| Parameter | Wert |
|---|---|
| Scheitelradius | unendlich |
| "Conic"-Konstante | 0.00 |
| 4.Ordnung - Koeffizient A | -3.5706165113e-05 |
| 6.Ordnung - Koeffizient B | -9.4676861855e-09 |
| 8.Ordnung - Koeffizient C | 1.2368357029e-10 |
| 10.Ordnung - Koeffizient D | -2.3643105236e-13 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

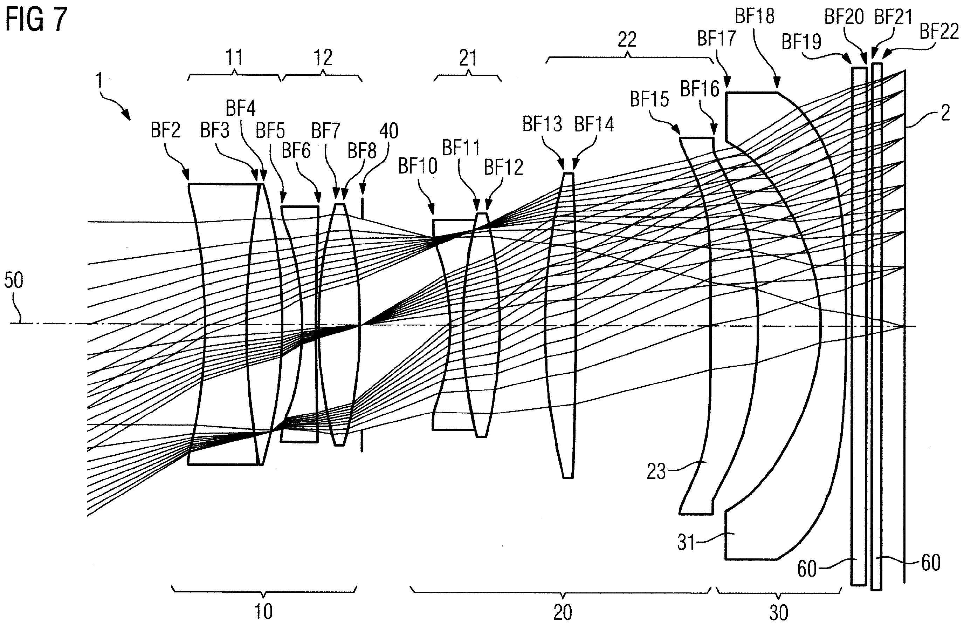

In der Figur 7 ist ein zweites konkretes Ausführungsbeispiel für das erfindungsgemäße Kameraobjektiv 1 dargestellt. Das zweite Ausführungsbeispiel zeigt eine 9-linsige Variante, die ebenfalls eine Öffnungszahl von 2,0 und eine Brennweite von 35 mm aufweist. Die Definitionen, Bezeichnungen und Abbildungen sind analog zum ersten Ausführungsbeispiel. Der 9-linsige Aufbau hat eine geringfügig größere Baulänge von 60 cm gegenüber dem Aufbau des ersten Ausführungsbeispiels. Damit erfüllt auch das zweite Ausführungsbeispiel die eingangs genannte Bedingung für ein kompaktes Kameraobjektiv 1 für eine Kamera mit Vollformatsensor, dass die Baulänge auf kleiner oder gleich dem 1,5-fachen des Bildkreisdurchmessers begrenzt ist. Das Kameraobjektiv 1 des zweiten Ausführungsbeispiels weist gegenüber dem ersten Ausführungsbeispiel eine andere Brechkraftverteilung in der vorderen Objektivgruppe auf. Diese könnte eine geringere toleranzinduzierte Bildgütedegradation ermöglichen.

Das Kameraobjektiv 1 des zweiten Ausführungsbeispiels umfasst neun Linsen, die in drei Linsengruppen 10, 20, 30 unterteilt sind. Die erste Linsengruppe 10 in dem zweiten Ausführungsbeispiel umfasst vier Linsen. Diese Linsengruppe ist wie in dem ersten Ausführungsbeispiel in zwei Teillinsengruppen 11, 12 unterteilt. Die objektseitige Teillinsengruppe 11 umfasst zwei Linsen. Die objektseitige Linse der beiden Linsen ist eine Bikonkavlinse, wohingegen die bildseitige Linse der beiden Linsen eine Bikonvexlinse ist. Beide Linsen sind zusammen verkittet und haben eine negative bzw. zerstreuende Brechkraft. Die bildseitige Teillinsengruppe 12 der ersten Linsengruppe 10 umfasst auch zwei Linsen. Die objektseitige Linse der beiden Linsen ist eine Bikonkavlinse. Die optische Fläche der Bikonkavlinse mit dem kleineren Krümmungsradius zeigt in Richtung des Objekts. Die bildseitige Linse der beiden Linsen ist eine Bikonvexlinse. Die beiden Linsen der bildseitigen Teillinsengruppe 12 sind nicht miteinander verkittet, die für eine Kittung notwendigen Flächen der beiden Linsen weisen unterschiedliche Krümmungsradien auf. Die Brechkraft der ersten Linsengruppe beträgt ein 0.896-faches der Kameraobjektiv-Gesamtbrechkraft.

Wie im ersten Ausführungsbeispiel weist die zweite Linsengruppe 20 in dem zweiten Ausführungsbeispiel vier Linsen auf. Diese vier Linsen sind wieder in zwei Teillinsengruppen 21, 22 unterteilt. Die objektseitige Teillinsengruppe 21 umfasst in dem zweiten Ausführungsbeispiel zwei Linsen. Die objektseitige Linse der beiden Linsen ist eine Bikonkavlinse, wohingegen die bildseitige Linse der beiden Linsen eine Bikonvexlinse ist. Beide Linsen sind miteinander verkittet und weisen eine negative bzw. zerstreuende Gesamtbrechkraft auf.

Die bildseitige Teillinsengruppe 22 der zweiten Linsengruppe 20 umfasst auch zwei Linsen. Die objektseitige Linse der beiden Linsen ist eine Bikonvexlinse, wobei die optische Fläche mit dem kleineren Krümmungsradius in Richtung des Objektes zeigt. Die bildseitige Linse der beiden Linsen ist eine positive Meniskuslinse und zeigt mit ihrer konkaven optischen Fläche in Richtung des Objektes. Die beiden Linsen der bildseitigen Teillinsengruppe 22 der zweiten Linsengruppe 20 weisen einen endlichen Abstand auf. Bei der Bewegung der Linsen, wenn das Kameraobjektiv 1 fokussiert, bleibt dieser Abstand konstant.

Die dritte Linsengruppe 30 umfasst wie im ersten Ausführungsbeispiel eine einzige negative Meniskuslinse. Die konkave optische Fläche der negativen Meniskuslinse zeigt in Richtung des Objekts. Auch in diesem Ausführungsbeispiel kann die einzelne Meniskuslinse fest vor einem Sensor 2 verbaut sein, wenn es sich bei dem Objektiv nicht um ein Wechselobjektiv handelt. Sie dient zur Einstellung der am Sensor 2 gewünschten Austrittspupillenlage.

Die gesamte Brechkraft der zweiten und der dritten Linsengruppe beträgt ein -0.176-faches der Kameraobjektiv-Gesamtbrechkraft.

Die Linsen der ersten Linsengruppe 10 sowie die einzelne Linse der dritten Linsengruppe 30 sind unbeweglich in Bezug zur optischen Achse 50 angeordnet. Des Weiteren ist eine Aperturblende 40 zwischen der ersten Linsengruppe 10 und der zweiten Linsengruppe 20 angeordnet. Auch diese Aperturblende 40 ist unbeweglich in Bezug zur optischen Achse 50 angeordnet.

Wie in dem ersten Ausführungsbeispiel werden auch im zweiten Ausführungsbeispiel zwei bi-asphärische Linsen 23, 31 BF 15, BF16, BF17, BF18 verwendet. Eine bi-asphärische Linse 23 wird dabei in der bildseitigen Teillinsengruppe 22 der zweiten Linsengruppe 20 und die andere bi-asphärische Linse 31 wird in der dritten Linsengruppe 30 verwendet.

Die zwei asphärischen Linsen 23, 31 weisen im vorliegenden Ausführungsbeispiel auf ihren asphärischen Flächen Formen auf, die zumindest im optisch genutzten Bereich der Flächen, insbesondere jedoch auf der gesamten Fläche, keine Wendepunkte aufweisen. Die Anstiegswinkel der Asphärenflächen sind überall auf jeder Fläche < 60°. Die asphärischen Linsen 23, 31 können damit durch gängige Herstellverfahren zum Blankpressen hergestellt werden. Ferner sind die asphärischen Linsen 23, 31 aus einem zum Blankpressen geeigneten Glas mit niedriger Übergangstemperatur gebildet. Für diese asphärischen Linsen 23, 31 werden hier "Low Tg Glasses" verwendet.

Des Weiteren weisen die bi-asphärischen Linsen 23, 31 im vorliegenden Ausführungsbeispiel jeweils eine Fläche BF15 bzw. BF 18, die eine optische Brechkraft mit einer eine zum Rand hin starken Progredienz zeigt. Die Brechkraft der Asphärenflächen mit zum Rand hin starker Progredienz der verwendeten asphärischen Linsen 23, 31 ist für das optische Strahlenbündel am Feldrand 5-fach größer als für ein Strahlenbündel in der Feldmitte.

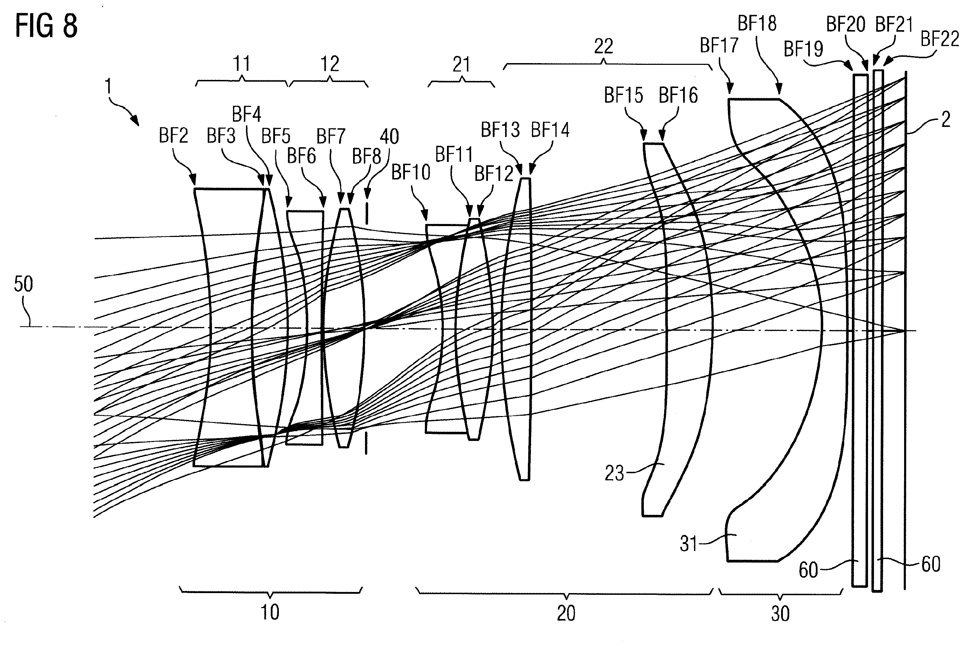

In Figur 8 ist das gleiche Kameraobjektiv 1 des zweiten Ausführungsbeispiels wie in Figur 7 dargestellt. In Figur 7 ist das Kameraobjektiv 1 auf unendlich fokussiert, wohingegen das Kameraobjektiv 1 in Figur 8 auf eine Fokussierung von 30 cm eingestellt ist.

Gegenüber der Figur 7 wurde in der Figur 8 nur die zweite Linsengruppe 20 bewegt. Genau wie in dem ersten Ausführungsbeispiel sind die Verschiebewege der beiden Teillinsengruppen 21, 22 der zweiten Linsengruppe 20 unterschiedlich stark ausgeprägt. Der Verschiebeweg der bildseitigen Teillinsengruppe 22 ist größer als der Verschiebeweg der objektseitigen Teillinsengruppe 21. Bei einer Fokussierung von unendlich auf 23 cm bewegen sich beide Teillinsengruppen 21, 22 in die gleiche Richtung. Wie im ersten Ausführungsbeispiel sind bei einer Fokussierung des Kameraobjektivs 1 auf 30 cm die beiden Teillinsengruppen 21, 22 enger beieinander als bei einer Fokussierung auf Unendlich.

Zudem sind in der Figur 7 und in der Figur 8 zwei Filter 60 zwischen dem Kameraobjektiv 1 und dem Sensor 2 dargestellt. Diese Filter 60 gehören jedoch nicht zum Kameraobjektiv 1.

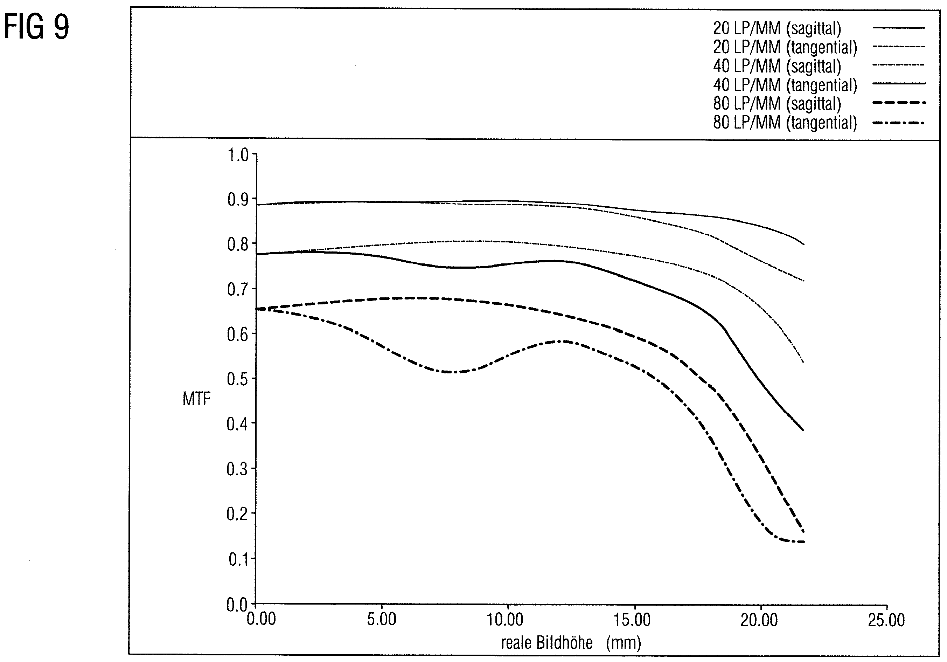

In Figur 9 ist die Modulationstransferfunktion über die Bildhöhe für das zweite Ausführungsbeispiel dargestellt. Auch in diesem Diagramm sind drei Kurvenpaare für eine unterschiedliche Anzahl an "Linienpaaren pro Millimeter" dargestellt. Das erste Kurvenpaar zeigt die Abhängigkeit der Modulationstransferfunktion bei 20 Linienpaaren pro Millimeter. Das zweite Kurvenpaar zeigt die Abhängigkeit der Modulationstransferfunktion bei 40 Linienpaaren pro Millimeter. Das dritte Kurvenpaar zeigt die Abhängigkeit der Modulationstransferfunktion bei 80 Linienpaaren pro Millimeter. Wie in Figur 3 zeigt die eine Kurve des Kurvenpaares den sagittalen Anteil des einfallenden Lichtes und die zweite Kurve den tangentialen Anteil des einfallenden Lichtes. Der Abfall der einzelnen Kurven bei größerer Bildhöhe ist in dem zweiten Ausführungsbeispiel geringer ausgeprägt als in dem ersten Ausführungsbeispiel.

Insbesondere das Kurvenpaar bei 20 Linienpaaren pro Millimeter zeigt im Bereich der Bildhöhe zwischen 0 mm und 15 mm einen konstanten Wert von 90 %. Dabei weisen der sagittale und der tangentiale Anteil fast den gleichen Wert auf.

Bei den weiteren Kurvenpaaren mit 40 Linienpaaren pro Millimeter und 80 Linienpaaren pro Millimeter zeigt der sagittale Anteil immer einen höheren Kontrast. Größtenteils sind die Werte zwischen dem sagittalen und dem tangentialen Anteil ähnlich.

Einen Kontrast von ca. 90 % zeigt das Kurvenpaar mit 20 Linienpaaren pro Millimeter. Einen durchschnittlichen Kontrast von 77 % im Bereich der Bildhöhe zwischen 0 mm und 15 mm zeigt das Kurvenpaar mit 40 Linienpaaren pro Millimeter. Das Kurvenpaar mit 80 Linienpaaren pro Millimeter weist in dem Bereich der Bildhöhe zwischen 0 mm und 16 mm mindestens einen Kontrast von 50 % auf.

Damit erfüllt das Kameraobjektiv 1 die eingangs erwähnte Bedingung, dass die Bildgüte bereits bei voller Objektivöffnung, bei einer Aperturblende 40 von 2.0, auf außergewöhnlich hohem Niveau liegt.

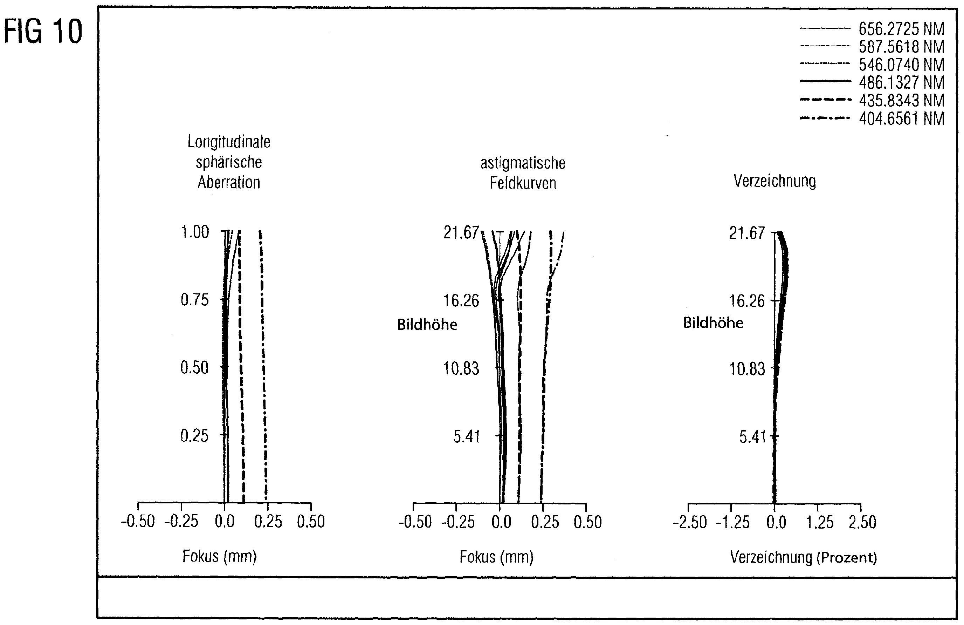

In dem linken Diagramm der Fig. 10 ist der Öffnungsfehler für das Kameraobjektiv 1 im zweiten Ausführungsbeispiel dargestellt. Zur Beschreibung des Öffnungsfehlers wird die Einfallshöhe als Funktion der Schnittweitendifferenz bzw. des Fokus dargestellt. Des Weiteren wird der Öffnungsfehler in Abhängigkeit unterschiedlicher Wellenlängen des sichtbaren Lichtes dargestellt. Hierbei liegen die Wellenlängen zwischen 404.6561 nm und 656.2725 nm. Der Öffnungsfehler des Kameraobjektivs 1 des zweiten Ausführungsbeispiels ist für größere Wellenlängen des sichtbaren Lichtes außergewöhnlich gut korrigiert.

In dem mittleren Diagramm der Figur 10 lässt sich der Astigmatismus des Kameraobjektivs 1 des zweiten Ausführungsbeispiels gut erkennen. Für unterschiedliche Wellenlängen des sichtbaren Lichtes erkennt man, dass der Astigmatismus in Bezug zu größeren Wellenlängen des sichtbaren Lichtes sehr gut korrigiert ist. Der Bereich der genutzten Wellenlängen ist mit denen im linken Diagramm identisch.

In dem rechten Diagramm von Figur 10 ist die Verzeichnung des Kameraobjektivs 1 des zweiten Ausführungsbeispiels über die Bildhöhe aufgetragen. Im Vergleich zum ersten Ausführungsbeispiel erkennt man hier, dass die Verzeichnung geringer ist und in diesem Ausführungsbeispiel außergewöhnlich gut korrigiert ist. Im Vergleich zum ersten Ausführungsbeispiel ist das Kameraobjektiv 1 des zweiten Ausführungsbeispiels bei der Korrektur der Verzeichnung etwas stärker abhängig von der Wellenlänge des sichtbaren Lichtes. Der Bereich der genutzten Wellenlängen ist mit denen im linken Diagramm identisch.

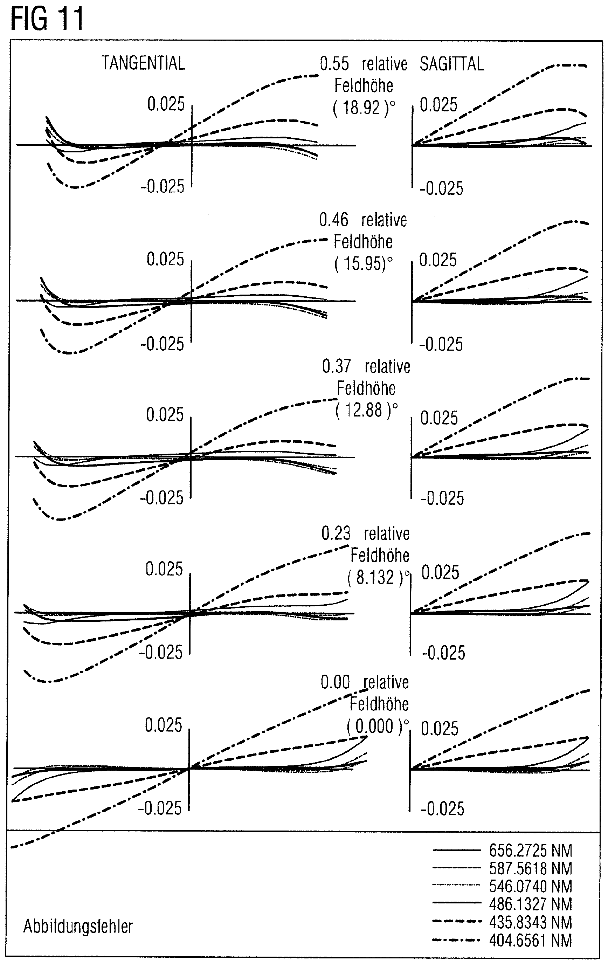

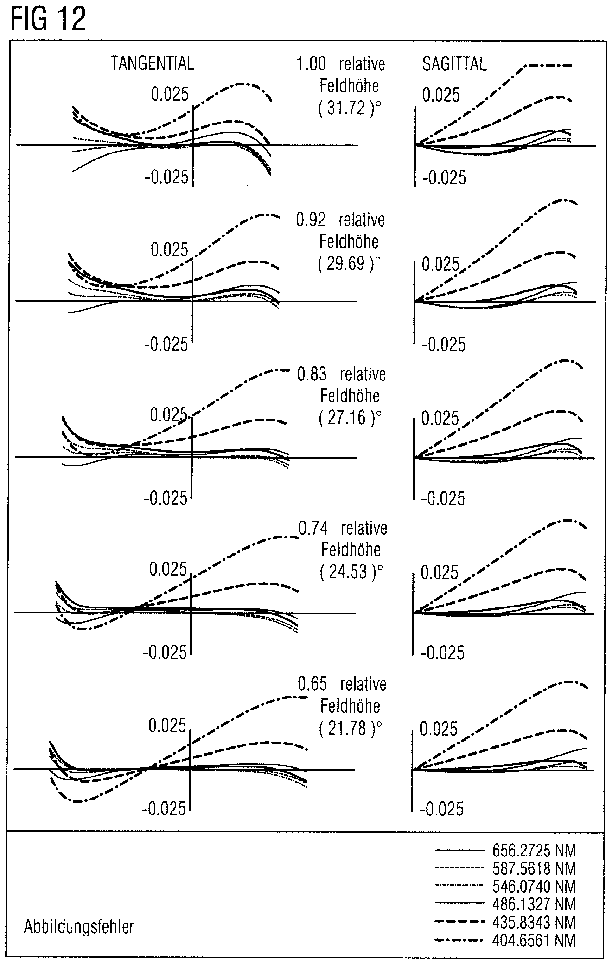

In den Figuren 11 und 12 sind für das Kameraobjektiv 1 des zweiten Ausführungsbeispiels die üblichen Queraberrationsdiagramme gezeigt.

In der Tabelle 7 sind die Konstruktionsgrunddaten des Kameraobjektivs 1 des zweiten Ausführungsbeispiels angegeben. Der Aufbau der Tabelle entspricht dem Aufbau der Tabelle aus dem ersten Ausführungsbeispiel. Die Flächen der Linsen BF2 bis BF22 sind in den Figuren 7 und 8 dargestellt.

Tabelle 7:

| Fläche | FlächenTyp | Scheitelradius der Flächenkrümmung | Abstand zur Folgefläche (Luftabstand bzw. Linsendicke) | Handelsbezeichnung mit Herstellerangabe | Halber Durchmesser der optisch genutzte n Fläche |
|---|---|---|---|---|---|
| Objekt | sphärisch | unendlich | unendlich | | |
| BF1 | sphärisch | unendlich | 10.00 | | 16.22748 |

(fortgesetzt)

| Fläche | FlächenTyp | Scheitelradius der Flächenkrümmung | Abstand zur Folgefläche (Luftabstand bzw. Linsendicke) | Handelsbezeichnung mit Herstellerangabe | Halber Durchmesser der optisch genutzte n Fläche |
|---|---|---|---|---|---|
| BF2 | sphärisch | -45.77944 | 3.55600 | SNSL3_OHARA | 10.84286 |
| BF3 | sphärisch | 62.39559 | 3.07648 | SLAH59_OHARA | 9.42220 |
| BF4 | sphärisch | -42.91742 | 1.71903 | | 9.10000 |
| BF5 | sphärisch | -25.07492 | 1.20000 | SNBH53 OHARA | 8.83291 |
| BF6 | sphärisch | 350.44048 | 0.20000 | | 9.04776 |
| BF7 | sphärisch | 37.78687 | 3.54274 | SLAH59_OHARA | 9.26635 |
| BF8 | sphärisch | -37.78687 | 0.20000 | | 9.24109 |
| Apertur 40 | sphärisch | unendlich | 7.52194 | | 8.90000 |
| BF10 | sphärisch | -19.50435 | 1.10112 | SNBH53_OHARA | 7.40000 |
| BF11 | sphärisch | 37.56866 | 3.16936 | SLAH59_OHARA | 8.00000 |
| BF12 | sphärisch | -37.56866 | 3.85243 | | 8.54875 |
| BF13 | sphärisch | 51.91541 | 2.63986 | SLAH59 OHARA | 11.69392 |
| BF14 | sphärisch | -341.09114 | 11.61717 | | 11.84371 |
| BF15 | asphärisch | 1.15961e+08 | 4.00000 | LLAL13_ OHARA | 14.02117 |
| BF16 | asphärisch | -37.34927 | 5.40388 | 5.40388 | 14.71969 |
| BF17 | asphärisch | -16.71775 | 2.20000 | LLAM69_ OHARA | 15.11816 |
| BF18 | asphärisch | -115.51557 | 0.50000 | | 18.42381 |
| BF19 | sphärisch | unendlich | 1.20000 | BK7_ Schott | 20.20252 |
| BF20 | sphärisch | unendlich | 0.50000 | | 20.49157 |
| BF21 | sphärisch | unendlich | 0.80000 | BK7_ Schott | 20.68155 |
| BF22 | sphärisch | unendlich | 2.00000 | | 20.87425 |
| Image | sphärisch | unendlich | 0.00000 | | 21.65028 |

Die Brennweite der Optik beträgt exakt 35.00 mm bei einer Objektentfernung gleich unendlich. Bei einer Fokussierung auf andere Objektentfernungen ändern sich die Lufträume der Flächen BF9, BF12 und BF16 gemäß Tabelle 7 (zwischen den explizit angegebenen Entfernungen ist entsprechend zu interpolieren). Die Fläche 0 in der folgenden Tabelle 8 ist die Ebene des Objektes.

Tabelle 8:

| | Stellung Z1 | Stellung Z2 | Stellung Z3 | Stellung Z4 |
|---|---|---|---|---|
| 0 | unendlich | 930 | 430 | 230 |
| BF9 | 7.52194 | 7.32428 | 7.04686 | 6.54260 |
| BF12 | 3.85243 | 2.95525 | 2.04406 | 0.80000 |
| BF16 | 5.40388 | 6.49871 | 7.68732 | 9.43564 |

Die zugehörigen Koeffizienten der asphärischen Flächen sind in den Tabellen 9, 10, 11, 12 gemäß der Definitionsgleichung der Scheitelpunktform angegeben. Dabei zeigen Tabelle 9 die Asphären-Koeffizienten der Fläche BF15, Tabelle 10 die Asphären-Koeffizienten der Fläche BF16, Tabelle 11 die Asphären-Koeffizienten der Fläche BF17 und Tabelle 12 die Asphären-Koeffizienten der Fläche BF18 des zweiten Ausführungsbeispiels.

Tabelle 9:

| Parameter | Wert |
|---|---|
| Scheitelradius | 1.1596098512e+08 |
| "Conic"-Konstante | 0.00 |
| 4.Ordnung - Koeffizient A | -4.3117941387e-05 |
| 6.Ordnung - Koeffizient B | -8.9700219676e-08 |
| 8.Ordnung - Koeffizient C | -2.2461040723e-10 |
| 10.Ordnung - Koeffizient D | 2.3276084439e-12 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 10:

| Parameter | Wert |
|---|---|
| Scheitelradius | -3.7349268563e+01 |
| "Conic"-Konstante | 0.00 |
| 4.Ordnung - Koeffizient A | -1.2282414275e-05 |
| 6.Ordnung - Koeffizient B | -1.2762723367e-07 |
| 8.Ordnung - Koeffizient C | 4.2266536101 e-10 |
| 10.Ordnung - Koeffizient D | 3.1102010688e-13 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 11:

| Parameter | Wert |
|---|---|
| Scheitelradius | -1.6717751953e+01 |
| "Conic"-Konstante | 0.00 |
| 4.Ordnung - Koeffizient A | 6.7588224319e-05 |
| 6.Ordnung - Koeffizient B | -3.4374752518e-07 |
| 8.Ordnung - Koeffizient C | 1.7550048279e-09 |
| 10.Ordnung - Koeffizient D | -2.9757540237e-12 |
| 12.Ordnung - Koeffizient E | 0.00 |

(fortgesetzt)

| Parameter | Wert |
|---|---|
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Tabelle 12:

| Parameter | Wert |
|---|---|
| Scheitelradius | -1.1551556639e+02 |
| "Conic"-Konstante | 0.00 |
| 4.Ordnung - Koeffizient A | 1.8971818565e-06 |
| 6.Ordnung - Koeffizient B | -1.5805381457e-07 |
| 8.Ordnung - Koeffizient C | 4.9706626928e-10 |
| 10.Ordnung - Koeffizient D | -7.4084714043e-13 |
| 12.Ordnung - Koeffizient E | 0.00 |
| 14.Ordnung - Koeffizient F | 0.00 |
| 16.Ordnung - Koeffizient G | 0.00 |
| 18.Ordnung - Koeffizient H | 0.00 |
| 20.Ordnung - Koeffizient J | 0.00 |

Die vorliegende Erfindung wurde anhand von Ausführungsbeispielen zu Erläuterungszwecken detailliert beschrieben. Dabei können einzelne Merkmale der unterschiedlichen Ausführungsbeispiele auch miteinander kombiniert werden, so dass die Erfindung nicht auf eine in bestimmten Ausführungsbeispielen offenbarte Merkmalskombination eingeschränkt werden soll. Außerdem kann von den Ausführungsbeispielen abgewichen werden. So können beispielsweise auch weniger als 8 bzw. 9 Linsen vorhanden sein, solange mindestens jeweils eine Linse in der ersten und in der dritten Linsengruppe sowie mindestens zwei Linsen in der zweiten Linsengruppe vorhanden sind. Die Erfindung soll daher nicht auf die Ausführungsbeispiele beschränkt sein, sondern lediglich durch die beigefügten Ansprüche.

Bezugszeichenliste

- 1 Kameraobjektiv
- 2 Sensor
- 10 erste Linsengruppe
- 20 zweite Linsengruppe
- 30 dritte Linsengruppe
- 40 Aperturblende
- 50 optische Achse
- 60 Filter
- 11 objektseitige Teillinsengruppe der ersten Linsengruppe
- 12 bildseitige Teillinsengruppe der ersten Linsengruppe
- 21 objektseitige Teillinsengruppe der zweiten Linsengruppe
- 22 bildseitige Teillinsengruppe der zweiten Linsengruppe
- 23 asphärische Linse der zweiten Linsengruppe
- 31 asphärische Linse der dritten Linsengruppe

AF2 - AF20 Linsenflächen im ersten Ausführungsbeispiel
BF2 - BF22 Linsenflächen im zweiten Ausführungsbeispiel

## Patentansprüche

1. Kameraobjektiv (1) für eine Vollformatkamera mit einer ersten, objektseitig führenden Linsengruppe (10), einer zweiten Linsengruppe (20), die auf die erste Linsengruppe (10) folgt, einer dritten, sensorseitig abschließenden Linsengruppe (30), die auf die zweite Linsengruppe (20) folgt, und einer Aperturblende (40), die zwischen der ersten Linsengruppe (10) und der zweiten Linsengruppe (20) angeordnet ist, wobei

    - die erste Linsengruppe (10) eine sammelnde Brechkraft besitzt,
    - die zweite Linsengruppe (20) wenigstens zwei entlang der optischen Achse (50) beweglich angeordnete Linsen umfasst, und
    - die dritte Linsengruppe (30) wenigstens eine in Längsrichtung der optischen Achse (50) fix angeordnete asphärische Linse (31) aufweist und die asphärische Linse einen Durchmesser von mindestens 25 mm besitzt.

2. Kameraobjektiv (1) nach Anspruch 1, wobei die asphärische Linse (31) der dritten Linsengruppe (30) zumindest im optisch genutzten Bereich wendepunktfrei ist.

3. Kameraobjektiv (1) nach Anspruch 1 oder Anspruch 2, wobei die zweite Linsengruppe (20) eine sammelnde Brechkraft aufweist.

4. Kameraobjektiv (1) nach einem der vorangehenden Ansprüche, wobei die zweite Linsengruppe (20) entlang der optischen Achse (50) mindestens eine objektseitige Teillinsengruppe (21) sowie mindestens eine bildseitige Teillinsengruppe (22) umfasst, wobei die objektseitige Teillinsengruppe (21) eine zerstreuende Brechkraft aufweist und die bildseitige Teillinsengruppe (22) eine sammelnde Brechkraft aufweist.

5. Kameraobjektiv (1) nach Anspruch 4, wobei die objektseitige Teillinsengruppe (21) und die bildseitige Teillinsengruppe (22) entlang der optischen Achse (50) unterschiedlich verschiebbar sind.

6. Kameraobjektiv (1) nach Anspruch 5, wobei die objektseitige Teillinsengruppe (21) und die bildseitige Teillinsengruppe (22) derart verschiebbar angeordnet sind, dass sie sich bei einer Fokussierung auf kürzere Objektentfernungen (51) in die gleiche Richtung bewegen.

7. Kameraobjektiv (1) nach einem der Ansprüche 1 bis 6, wobei die zweite Linsengruppe (20) mindestens eine asphärische Linse (23) aufweist.

8. Kameraobjektiv (1) nach Anspruch 7, wobei die mindestens eine asphärische Linse (23) der zweiten Linsengruppe (20) zumindest im optisch genutzten Bereich wendepunktfrei ist.

9. Kameraobjektiv (1) nach Anspruch 8 mit Rückbezug auf einen der Ansprüche 3 bis 6, wobei die bildseitige Teillinsengruppe (21) die mindestens eine wendepunktfreie, asphärische Linse (23) der zweiten Linsengruppe aufweist.

10. Kameraobjektiv (1) nach einem der Ansprüche 7 bis 9, wobei die mindestens eine asphärische Linse (23) der zweiten Linsengruppe entlang ihrer asphärischen Flächen Anstiegswinkel kleiner oder gleich 60° aufweist.

11. Kameraobjektiv (1) nach einem der Ansprüche 7 bis 10, wobei die mindestens eine asphärische Linse (23) der zweiten Linsengruppe mindestens eine asphärische Fläche mit einer zum Rand hin eine starke Progredienz aufweisenden optischen Brechkraft umfasst.

12. Kameraobjektiv (1) nach Anspruch 11, wobei die Brechkraft eines Strahlenbündels am Feldrand gegenüber der Brechkraft eines Strahlenbündels in der Feldmitte um mindestens einen Faktor 5 erhöht ist.

13. Kameraobjektiv (1) nach einem der vorhergehenden Ansprüche, wobei die erste Linsengruppe (10) entlang der optischen Achse (50) mindestens eine objektseitige Teillinsengruppe (11) sowie mindestens eine bildseitige Teillinsengruppe (12) umfasst, wobei die objektseitige Teillinsengruppe (11) eine zerstreuende Brechkraft aufweist und die bildseitige Teillinsengruppe (12) eine sammelnde Brechkraft aufweist.

**14.** Kameraobjektiv (1) nach einem der vorhergehenden Ansprüche, wobei die erste Linsengruppe (10) entlang der optischen Achse (50) unbeweglich angeordnet ist.

**15.** Kameraobjektiv (1) nach einem der vorhergehenden Ansprüche, wobei die wenigstens eine asphärische Linse (31) der dritten Linsengruppe (30) entlang ihrer asphärischen Flächen Anstiegswinkel kleiner oder gleich 60° aufweist.

**16.** Kameraobjektiv (1) nach einem der vorhergehenden Ansprüche, wobei die wenigstens eine asphärische Linse (31) der dritten Linsengruppe (30) mindestens eine asphärische Fläche mit einer zum Rand hin eine starke Progredienz aufweisenden optischen Brechkraft umfasst.

**17.** Kameraobjektiv (1) nach Anspruch 16, wobei die Brechkraft eines Strahlenbündels am Feldrand gegenüber der Brechkraft eines Strahlenbündels in der Feldmitte mindestens einen Faktor 5 aufweist.

**18.** Kameraobjektiv (1) nach einem der vorhergehenden Ansprüche, wobei die wenigstens eine asphärische Linse (31) der dritten Linsengruppe (30) entlang der Strahlrichtung als letzte Linse (31) angeordnet ist.

**19.** Kameraobjektiv (1) nach einem der vorhergehenden Ansprüche, wobei die Eintrittspupille des Kameraobjektivs (1) nah an der ersten Linse liegt, wobei die nahe Lage der Eintrittspupille an der ersten Linse durch die Bedingung

$$x/L<=0.2$$

gegeben ist, wobei
x den Abstand vom ersten Linsenscheitel zum Mittelpunkt der Eintrittspupille und L die Baulänge des Objektivs angeben.

**20.** Verwendung eines Kameraobjektivs (1) nach einem der vorhergehenden Ansprüche mit einer vorgeschalteten Vorsatzoptik.

**21.** Foto- oder Filmkamera mit einem Kameraobjektiv (1) nach einem der Ansprüche 1 bis 19.

FIG 1
1
2
AF2
AF3
AF4
AF5
AF6
AF8
AF9
AF10
AF11
AF12
AF13
AF14
AF15
AF16
AF17
AF18
AF19
AF20
10
11
12
20
21
22
23
30
31
40
50
60

FIG 2
1
2
AF2
AF3
AF4
AF5
AF6
AF8
AF9
AF10
AF11
AF12
AF13
AF14
AF15
AF16
AF17
AF18
AF19
AF20
10
11
12
20
21
22
23
30
31
40
50
60
60

FIG 3

20 LP/MM (sagital)
20 LP/MM (tangential)
40 LP/MM (sagital)
40 LP/MM (tangential)
80 LP/MM (sagital)
80 LP/MM (tangential)
MTF
1.0
0.9
0.8
0.7
0.6
0.5
0.4
0.3
0.2
0.1
0.0
0.00
5.00
10.00
15.00
20.00
25.00
reale Bildhöhe (mm)

FIG 4

656.2725 NM
587.5618 NM
546.0740 NM
486.1327 NM
435.8343 NM
404.6561 NM
Longitudinale sphärische Aberration
1.00
0.75
0.50
0.25
-0.50 -0.25 0.0 0.25 0.50
Fokus (mm)
astigmatische Feldkurven
21.67
16.24
Bildhöhe
10.83
5.41
-0.50 -0.25 0.0 0.25 0.50
Fokus (mm)
Verzeichnung
21.67
16.24
Bildhöhe
10.83
5.41
-2.50 -1.25 0.0 1.25 2.50
Verzeichnung (Prozent)

FIG 5

TANGENTIAL
SAGITTAL
0.55 relative Feldhöhe ( 18.90 )°
0.025
-0.025
0.46 relative Feldhöhe ( 15.90 )°
0.025
-0.025
0.37 relative Feldhöhe ( 12.84 )°
0.025
-0.025
0.23 relative Feldhöhe ( 8.115 )°
0.025
-0.025
0.00 relative Feldhöhe ( 0.000 )°
0.025
-0.025
656.2725 NM
587.5618 NM
546.0740 NM
486.1327 NM
435.8343 NM
404.6561 NM
Abbildungsfehler

FIG 6

TANGENTIAL
1.00 relative
Feldhöhe
( 31.74 )°
SAGITTAL
0.025
-0.025
0.92 relative
Feldhöhe
( 29.78 )°
0.83 relative
Feldhöhe
( 27.28 )°
0.74 relative
Feldhöhe
( 24.61 )°
0.65 relative
Feldhöhe
( 21.81 )°
656.2725 NM
587.5618 NM
546.0740 NM
486.1327 NM
435.8343 NM
404.6561 NM
Abbildungsfehler

FIG 7
1
2
10
11
12
20
21
22
23
30
31
40
50
60
BF2
BF3
BF4
BF5
BF6
BF7
BF8
BF10
BF11
BF12
BF13
BF14
BF15
BF16
BF17
BF18
BF19
BF20
BF21
BF22

FIG 8
1
2
BF2
BF3
BF4
BF5
BF6
BF7
BF8
BF10
BF11
BF12
BF13
BF14
BF15
BF16
BF17
BF18
BF19
BF20
BF21
BF22
10
11
12
20
21
22
23
30
31
40
50
60
60

FIG 9

20 LP/MM (sagittal)
20 LP/MM (tangential)
40 LP/MM (sagittal)
40 LP/MM (tangential)
80 LP/MM (sagittal)
80 LP/MM (tangential)
MTF
1.0
0.9
0.8
0.7
0.6
0.5
0.4
0.3
0.2
0.1
0.0
0.00
5.00
10.00
15.00
20.00
25.00
reale Bildhöhe (mm)

FIG 10

656.2725 NM
587.5618 NM
546.0740 NM
486.1327 NM
435.8343 NM
404.6561 NM
Longitudinale sphärische Aberration
1.00
0.75
0.50
0.25
-0.50 -0.25 0.0 0.25 0.50
Fokus (mm)
astigmatische Feldkurven
21.67
16.26
Bildhöhe
10.83
5.41
-0.50 -0.25 0.0 0.25 0.50
Fokus (mm)
Verzeichnung
21.67
16.26
Bildhöhe
10.83
5.41
-2.50 -1.25 0.0 1.25 2.50
Verzeichnung (Prozent)

# FIG 11

TANGENTIAL
SAGITTAL
0.55 relative Feldhöhe ( 18.92 )°
0.46 relative Feldhöhe ( 15.95)°
0.37 relative Feldhöhe ( 12.88 )°
0.23 relative Feldhöhe ( 8.132 )°
0.00 relative Feldhöhe ( 0.000 )°
0.025
-0.025
656.2725 NM
587.5618 NM
546.0740 NM
486.1327 NM
435.8343 NM
404.6561 NM
Abbildungsfehler

FIG 12

TANGENTIAL
SAGITTAL
1.00 relative Feldhöhe ( 31.72 )°
0.92 relative Feldhöhe ( 29.69 )°
0.83 relative Feldhöhe ( 27.16 )°
0.74 relative Feldhöhe ( 24.53 )°
0.65 relative Feldhöhe ( 21.78 )°
0.025
-0.025
656.2725 NM
587.5618 NM
546.0740 NM
486.1327 NM
435.8343 NM
404.6561 NM
Abbildungsfehler

100
102
31
22
21
40
1
104
50
30
20
10

Fig. 13

## EUROPÄISCHER RECHERCHENBERICHT

Nummer der Anmeldung
EP 17 20 8799

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br>Y | JP H11 142741 A (NIKON CORP) 28. Mai 1999 (1999-05-28)<br>* Absatz [0050]; Abbildungen 1,2,11,20 * | 1-3,7,8, 13,14, 20,21<br>4-6, 9-12, 15-19 | INV. G02B7/04 G02B7/08 G02B13/00 |
| X<br>Y | JP 2009 145589 A (NIKON CORP) 2. Juli 2009 (2009-07-02)<br>* Abbildungen 1,3,4,5,7; Tabellen 1-3 * | 1-6,20, 21<br>4-6,9,10 | |
| X | US 2011/228160 A1 (IMAOKA TAKUYA [JP] ET AL) 22. September 2011 (2011-09-22)<br>* Abbildungen 1-25 * | 1,2,18, 20,21 | |
| Y | US 2015/212389 A1 (CHEN FENG [CN] ET AL) 30. Juli 2015 (2015-07-30)<br>* das ganze Dokument * | 11,12, 15-19 | |
| | | | RECHERCHIERTE SACHGEBIETE (IPC) |
| | | | G02B |

Der vorliegende Recherchenbericht wurde für alle Patentansprüche erstellt

1

| Recherchenort | Abschlußdatum der Recherche | Prüfer |
|---|---|---|
| München | 14. Mai 2018 | Daffner, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 17 20 8799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2018

| Im Recherchenbericht angeführtes Patentdokument | Datum der Veröffentlichung | Mitglied(er) der Patentfamilie | Datum der Veröffentlichung |
|---|---|---|---|
| JP H11142741 A | 28-05-1999 | KEINE | |
| JP 2009145589 A | 02-07-2009 | JP 5282399 B2 | 04-09-2013 |
| | | JP 2009145589 A | 02-07-2009 |
| US 2011228160 A1 | 22-09-2011 | JP 5213898 B2 | 19-06-2013 |
| | | JP 2011197472 A | 06-10-2011 |
| | | US 2011228160 A1 | 22-09-2011 |
| US 2015212389 A1 | 30-07-2015 | CN 104007539 A | 27-08-2014 |
| | | JP 5960854 B2 | 02-08-2016 |
| | | JP 2015141416 A | 03-08-2015 |
| | | TW 201439581 A | 16-10-2014 |
| | | US 2015212389 A1 | 30-07-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150198790 A1
- US 8369029 B2
- DE 102004060786 A1
- US 9310590 B1
- US 20160011399 A1
- US 20150212389 A1
- US 8964307 B2
- US 8373932 B2
- US 9116328 B2
- US 9025258 B2
- US 9036276 B2
- US 9217843 B2
- US 9235030 B2
- US 20150177492 A1
- US 4416518 A
- US 5986821 A
- US 4456345 A